# EUROPEAN PATENT APPLICATION

(11) **EP 3 088 474 A1**
(43) Date of publication of application: **02.11.2016**
(21) Application number: 14875396.5
(22) Date of filing: 25.12.2014
(51) Int. Cl.: C08L 101/10, C08K 5/103, C09D 201/10, C09J 201/10, C09K 3/10

(54) **CURABLE COMPOSITION AND CURED PRODUCT THEREOF**

(30) Priority: 26.12.2013 JP 2013268738
(71) Applicant: Kaneka Corporation, Osaka-shi, Osaka 530-8288 (JP)
(72) Inventor: YANO, Ayako, Takasago-shi Hyogo 676-8688 (JP)
(74) Representative: Vossius & Partner Patentanwälte Rechtsanwälte mbB
(86) International application number: PCT/JP2014/084214
(87) International publication number: WO 2015/098998

(57) **Abstract**

The present invention provides a curable composition containing (A) an organic polymer having a silicon-containing group, which can be crosslinked by forming a siloxane bond (100 parts by weight), (B) a diester compound obtained from polyethylene glycol and aliphatic monocarboxylic acid and/or alicyclic monocarboxylic acid (21 - 300 parts by weight), and (C) a curing catalyst (0.01 - 20 parts by weight).

## Description

### Technical Field

The present invention relates to a curable composition containing an organic polymer having a silicon-containing group which has a hydroxy group or a hydrolyzable group bonded to a silicon atom, and can be crosslinked by forming a siloxane bond (hereinafter to be also referred to as "reactive silicone group").

### Background Art

It is known that an organic polymer containing at least one reactive silicone group in a molecule is crosslinked by the formation of a siloxane bond, which is accompanied by hydrolysis and the like of the reactive silicone group due to moisture and the like even at room temperature, to give a rubbery cured product.

Polyoxyalkylene-based polymers and (meth)acrylate-based polymers having such reactive silicone groups have been disclosed in patent document 1, patent document 2 and the like, already industrially produced and widely used for applications such as sealing material, adhesive, paint and the like.

Curable compositions containing an organic polymer having a reactive silicone group generally contain a plasticizer to improve workability and adjust the mechanical property of cured products, and phthalate-based plasticizers having low viscosity at a low cost have conventionally been used. In a one-component composition using a reactive silicone group-containing polymer, curing proceeds from the surface due to the moisture in the air. In application requesting strength and adhesiveness in early stages, acceleration of deep curing has been desired. To improve depth curability, a polypropylene glycol-based plasticizer having a molecular weight of about 3000 - 10000 is sometimes used. While patent document 3 shows exemplary use of a high-molecular weight polypropylene glycol-based compound, since the polypropylene glycol-based compound has high viscosity, a curable composition using same also shows high viscosity to problematically lower the workability.

While polyethylene glycol-based compounds have high affinity for water and high moisture permeability, they have low compatibility with reactive silicone group-containing polypropylene glycol-based polymers, and are associated with problems of separation of a polyethylene glycol-based compound from a cured product formed from a composition containing a polyethylene glycol-based compound and a reactive silicone group-containing polypropylene glycol-based polymer and the like. Patent document 4 exemplifies a composition containing oxyalkylene-based polymer (A) having a reactive silicone group, compound (B) having a long-chain hydrocarbon group and an oxyethylene group, and curing catalyst (C). In this document, the amount of the aforementioned compound (B) to be used is limited to a small amount. While patent document 5 exemplifies a composition containing an alkylene glycol ester compound having an aromatic ring, the composition described in this document, when in the form of a one-component composition mixed with a curing catalyst, shows low storage stability and has a problem of markedly decreased curability after storage.

On the other hand, use of an aliphatic monocarboxylate compound of polyethylene glycol in a resin composition constituting an interlay for glass is exemplified in patent document 6. However, there is no previous instance using an aliphatic monocarboxylate compound of polyethylene glycol in a curable composition containing an organic polymer having a reactive silicone group.

### [Document List]

### Patent Documents

patent document 1: JP-A-52-73998
patent document 2: JP-A-11-130931
patent document 3: JP-A-01-279958
patent document 4: JP-A-2003-82222
patent document 5: JP-A-2013-28472
patent document 6: JP-A-11-323055
SUMMARY OF THE INVENTION

### Problems to be Solved by the Invention

The present invention aims to provide a one-component curable composition showing good depth curability (i.e., quickly cured to the depth, low viscosity, superior workability, superior storage stability, and a small decrease in curability after storage.

### Means of Solving the Problems

The present inventor has conducted studies in an attempt to solve the aforementioned problems and found that use of a diester compound obtained from polyethylene glycol and aliphatic monocarboxylic acid and/or alicyclic monocarboxylic acid as a plasticizer affords a curable composition having improved depth curability, good workability, and low level of decrease in curability after storage. The aforementioned diester compound also permits combined use with conventional phthalate-based plasticizers. Particularly when a reactive silicone group-containing a (meth)acrylate-based polymer is used, poor depth curability is the problem as compared to the use of a reactive silicone group-containing polyoxyalkylene-based polymer. However, the present inventor has found that the aforementioned diester compound can be preferably used even in a composition containing a reactive silicone group-containing (meth)acrylate-based polymer. Furthermore, the present inventor has found that the aforementioned diester compound can also be used even in a composition containing an organic polymer having a urethane bond and/or a urea bond in the main chain. The present invention based on such findings is as described below.

[1] A curable composition comprising
   (A) 100 parts by weight of an organic polymer having a silicon-containing group, which can be crosslinked by forming a siloxane bond,
   (B) 21 - 300 parts by weight of a diester compound obtained from polyethylene glycol and aliphatic monocarboxylic acid and/or alicyclic monocarboxylic acid, and
   (C) 0.01 - 20 parts by weight of a curing catalyst.
[2] The curable composition of the aforementioned [1], wherein the organic polymer of component (A) is at least one selected from the group consisting of a polyoxyalkylene-based polymer, a saturated hydrocarbon-based polymer and a (meth)acrylate-based polymer.
[3] The curable composition of the aforementioned [2], wherein the polyoxyalkylene-based polymer is a polyoxypropylene-based polymer.
[4] The curable composition of any one of the aforementioned [1] - [3], wherein the organic polymer of component (A) has a urethane bond and/or a urea bond in the main chain thereof.
[5] The curable composition of any one of the aforementioned [1] - [4], wherein the silicon-containing group of the organic polymer of component (A) is a trimethoxysilyl group.
[6] The curable composition of the aforementioned [1], wherein the organic polymer of component (A) is at least one selected from the group consisting of a polyoxyalkylene-based polymer, a saturated hydrocarbon-based polymer and a (meth)acrylate-based polymer, and has at least one silicon-containing group selected from the group consisting of a trimethoxysilyl group, a triethoxysilyl group, a dimethoxymethylsilyl group, a (methoxymethyl)dimethoxysilyl group and a methyldimethoxysilyl group, in the number of 1.1 - 5 on average in 1 molecule, and a number average molecular weight of 1,000 - 100,000.
[7] The curable composition of the aforementioned [1], wherein the organic polymer of component (A) is at least one selected from the group consisting of a polyoxyalkylene-based polymer and a (meth)acrylate-based polymer and has at least one silicon-containing group selected from the group consisting of a trimethoxysilyl group, a (methoxymethyl)dimethoxysilyl group and a methyldimethoxysilyl group, in the number of 1.1 - 3 on average in 1 molecule, and a number average molecular weight of 2,000 - 50,000.
[8] The curable composition of the aforementioned [1], wherein the organic polymer of component (A) is a polyoxyalkylene-based polymer having 1.1 - 2 trimethoxysilyl groups on average in 1 molecule, and a number average molecular weight of 3,000 - 30,000.
[9] The curable composition of the aforementioned [1], wherein the organic polymer of component (A) is a polyoxypropylene-based polymer having 1.1 - 2 trimethoxysilyl groups on average in 1 molecule, and a number average molecular weight of 3,000 - 30,000.
[10] The curable composition of any one of the aforementioned [1] - [9], wherein the polyethylene glycol constituting the diester compound of component (B) is at least one selected from diethylene glycol, Triethylene glycol, tetraethylene glycol and pentaethylene glycol.
[11] The curable composition of any one of the aforementioned [1] - [10], wherein the diester compound of component (B) has a molecular weight of not more than 500.
[12] The curable composition of any one of the aforementioned [1] - [11], wherein the diester compound of component (B) is substantially free of a hydroxy group.
[13] The curable composition of any one of the aforementioned [1] - [9] and [12], wherein the diester compound of component (B) is at least one selected from the group consisting of triethylene glycol bis(2-ethylhexanoate), diethylene glycol dibutyrate, diethylene glycol dihexanoate, diethylene glycol bis(2-ethylhexanoate), diethylene glycol dioctoate, diethylene glycol bis(2-propylheptanoate), diethylene glycol dicyclohexanoate, triethylene glycol dibutyrate, triethylene glycol dihexanoate, triethylene glycol dioctoate, triethylene glycol bis(2-propylheptanoate), triethylene glycol dicyclohexanoate, tetraethylene glycol dibutyrate, tetraethylene glycol dihexanoate, tetraethylene glycol bis(2-ethylhexanoate), tetraethylene glycol dioctoate, tetraethylene glycol bis(2-propylheptanoate), tetraethylene glycol dicyclohexanoate, pentaethylene glycol dibutyrate, pentaethylene glycol dihexanoate, pentaethylene glycol bis(2-ethylhexanoate), pentaethylene glycol dioctoate, pentaethylene glycol bis(2-propylheptanoate), pentaethylene glycol dicyclohexanoate, and oligoethylene glycol bis(2-ethylhexanoate).
[14] The curable composition of any one of the aforementioned [1] - [9] and [12], wherein the diester compound of component (B) is triethylene glycol, bis(2-ethylhexanoate).
[15] The curable composition of any one of the aforementioned [1] - [9], wherein the diester compound of component (B) is at least one selected from the group consisting of triethylene glycol bis(2-ethylhexanoate), diethylene glycol dibutyrate, diethylene glycol dihexanoate, diethylene glycol bis(2-ethylhexanoate), diethylene glycol dioctoate, diethylene glycol bis(2-propylheptanoate), diethylene glycol dicyclohexanoate, triethylene glycol dibutyrate, triethylene glycol dihexanoate, triethylene glycol dioctoate, triethylene glycol bis(2-propylheptanoate), triethylene glycol dicyclohexanoate, tetraethylene glycol dibutyrate, tetraethylene glycol dihexanoate, tetraethylene glycol bis(2-ethylhexanoate), tetraethylene glycol dioctoate, tetraethylene glycol bis(2-propylheptanoate), tetraethylene glycol dicyclohexanoate, pentaethylene glycol dibutyrate, pentaethylene glycol dihexanoate, pentaethylene glycol bis(2-ethylhexanoate), pentaethylene glycol dioctoate, pentaethylene glycol bis(2-propylheptanoate), pentaethylene glycol dicyclohexanoate, and oligoethylene glycol bis(2-ethylhexanoate), which has a hydroxyl value of 10 mg KOH/g or less.
[16] The curable composition of any one of the aforementioned [1] - [9], wherein the diester compound of component (B) is triethylene glycol bis(2-ethylhexanoate) having a hydroxyl value of 5 mg KOH/g or less.
[17] The curable composition of any one of the aforementioned [1] - [16], wherein the amount of the diester compound of component (B) is 30 - 200 parts by weight per 100 parts by weight of the organic polymer of component (A).
[18] The curable composition of any one of the aforementioned [1] - [16], wherein the amount of the diester compound of component (B) is 40 - 100 parts by weight per 100 parts by weight of the organic polymer of component (A).
[19] The curable composition of any one of the aforementioned [1] - [18], wherein the curing catalyst of component (C) is an organotin compound.
[20] The curable composition of the aforementioned [19], wherein the organotin compound is a dioctyltin-based compound.
[21] The curable composition of any one of the aforementioned [1] - [18], wherein the curing catalyst of component (C) is an amidine compound.
[22] The curable composition of the aforementioned [21], wherein the amidine compound is 1-phenylguanidine.
[23] The curable composition of any one of the aforementioned [1] - [22], wherein the amount of the curing catalyst of component (C) is 0.1 - 10 parts by weight per 100 parts by weight of the organic polymer of component (A).
[24] A sealing material comprising the curable composition of any one of the aforementioned [1] - [23].
[25] An adhesive comprising the curable composition of any one of the aforementioned [1] - [23].
[26] A coating material comprising the curable composition of any one of the aforementioned [1] - [23].
[27] A water-proof material comprising the curable composition of any one of the aforementioned [1] - [23].
[28] A cured product formed from the curable composition of any one of the aforementioned [1] - [23].

### [Effect of the Invention]

The curable composition of the present invention shows good depth curability, low viscosity, superior workability, superior storage stability, and a small decrease in the curability after storage.

### [Description of Embodiments]

### <curable composition>

In the curable composition of the present invention, only one kind of the aforementioned organic polymer of component (A), diester compound of component (B), curing catalyst of component (C), and the below-mentioned other components may be used or two or more kinds thereof may be used in combination. Each component is sequentially explained below.

### <component (A)>

The main chain of the organic polymer of component (A) is not particularly limited. Examples of the polymer constituting the main chain of the organic polymer include polyoxyalkylene-based polymers such as polyoxyethylene, polyoxypropylene, polyoxybutylene, polyoxytetramethylene, polyoxyethylene-polyoxypropylene copolymer, polyoxypropylene-polyoxybutylene copolymer and the like; hydrocarbon-based polymers such as ethylene-propylene-based copolymer, polyisobutylene, copolymer of isobutylene and isoprene, polychloroprene, polyisoprene, copolymer of isoprene or butadiene and acrylonitrile and/or styrene and the like, polybutadiene, copolymer of isoprene or butadiene and acrylonitrile and styrene, hydrogenated polyolefin-based polymer obtained by hydrogenation of these polyolefin-based polymer and the like; polyester-based polymers obtained by condensation of dibasic acids such as adipic acid and glycol or ring opening polymerization of lactones; (meth)acrylate-based polymers obtained by radical polymerization of monomers such as ethyl(meth)acrylate, butyl(meth)acrylate and the like; vinyl polymer obtained by radical polymerization of monomers such as (meth)acrylate, vinyl acetate, acrylonitrile, styrene and the like; graft polymers obtained by polymerization of vinyl monomers in the aforementioned organic polymer; polysulfide-based polymers; polyamide-based polymers such as nylon 6 obtained by ring opening polymerization of ε-caprolactam, nylon 6·6 obtained by polycondensation of hexamethylenediamine and adipic acid, nylon 6·10 obtained by polycondensation of hexamethylenediamine and sebacic acid, nylon 11 obtained by polycondensation of ε-aminoundecanoic acid, nylon 12 obtained by ring opening polymerization of ε-aminolaurolactam, copolymerized nylon having not less than 2 components from the above-mentioned nylons; polycarbonate-based polymers produced by polycondensation of, for example, bisphenol A and carbonyl chloride; diallyl phthalate-based polymers and the like. In the present invention, "(meth)acrylate" is "acrylate and/or methacrylate" and "(meth)acrylic acid" is "acrylic acid and/or methallyl acid". Other similar indications mean the same as these.

Saturated hydrocarbon-based polymers such as polyisobutylene, hydrogenated polyisoprene, hydrogenated polybutadiene and the like, polyoxyalkylene-based polymer, and (meth)acrylate-based polymer are preferable since they have a comparatively low glass transition temperature and the obtained cured product is superior in cold resistance.

The glass transition temperature of the organic polymer of component (A) is not particularly limited. It is preferably not more than 20°C, more preferably not more than 0°C, particularly preferably not more than -20°C. When the glass transition temperature exceeds 20°C, the viscosity of the curable composition becomes high in winter or cold area, and the workability is degraded in some cases. The flexibility of the cured product may decrease and the elongation is degraded in some cases. The aforementioned glass transition temperature is a value obtained by DSC measurement.

Polyoxyalkylene-based polymer and (meth)acrylate-based polymer have high moisture permeability, and the a one-component composition containing same is superior in depth curability, and also superior in adhesiveness. As the organic polymer, therefore, polyoxyalkylene-based polymer and (meth)acrylate-based polymer are further preferable, polyoxyalkylene-based polymer is particularly preferable, and polyoxypropylene-based polymer is most preferable.

The reactive silicone group contained in the organic polymer of the present invention has a hydroxy group or hydrolyzable group bonded to a silicon atom, and is a group that can be crosslinked by forming a siloxane bond by a reaction accelerated by a silanol condensation catalyst. As used herein, the hydrolyzable group means a group that reacts with water to form a hydroxy group.

As the reactive silicone group, a group represented by the formula (1) :

-SiR¹₃₋ₐXₐ (1)

{wherein each R¹ is independently an alkyl group having 1 - 20 carbon atoms, an aryl group having 6 - 20 carbon atoms, an aralkyl group having 7 - 20 carbon atoms, or a triorganosiloxy group represented by -OSi(R')₃ wherein each R' is independently a hydrocarbon group having 1 - 20 carbon atoms, each X is independently a hydroxy group or a hydrolyzable group, and a is an integer of 1 - 3}
can be mentioned.

The hydrolyzable group is not particularly limited and may be a conventionally known hydrolyzable group. Examples thereof include a halogen atom, alkoxy group, acyloxy group, amino group, amido group, aminooxy group, mercapto group, alkenyloxy group and the like. Of these, a hydrogen atom, alkoxy group, acyloxy group, ketoxymate group, amino group, amido group, aminooxy group, mercapto group, and alkenyloxy group are preferable, and alkoxy group is particularly preferable since it shows mild hydrolyzability and is easy to handle.

The hydrolyzable group and hydroxy group in the number range of 1 - 3 can be bonded to one silicon atom. When two or more hydrolyzable groups and hydroxy groups are bonded to a reactive silicone group, they may be the same or different.

The a in the above-mentioned formula (1) is preferably 2 or 3 from the aspect of curability. When rapid curability of the composition is particularly desired, it is preferably 3, and when storage stability of the composition is desired, it is preferably 2.

Examples of R¹ in the above-mentioned formula (1) include alkyl groups such as methyl group, ethyl group and the like, cycloalkyl groups such as cyclohexyl group and the like, aryl groups such as phenyl group and the like, aralkyl groups such as benzyl group and the like, triorganosiloxy group represented by -OSi(R')₃ wherein R' is methyl group, phenyl group etc., and the like. Of these, methyl group is particularly preferable.

Examples of the reactive silicone group include trimethoxysilyl group, triethoxysilyl group, triisopropoxysilyl group, dimethoxymethylsilyl group, diethoxymethylsilyl group, diisopropoxymethylsilyl group, (chloromethyl)dimethoxysilyl group, (methoxymethyl)dimethoxysilyl group, methyldimethoxysilyl group and the like. Since the activity is high and good curability is obtained, a trimethoxysilyl group, a triethoxysilyl group, a dimethoxymethylsilyl group, a (methoxymethyl)dimethoxysilyl group and a methyldimethoxysilyl group are preferable, a trimethoxysilyl group, a (methoxymethyl)dimethoxysilyl group and a methyldimethoxysilyl group are more preferable, and a trimethoxysilyl group is further preferable. From the aspect of storage stability, a dimethoxymethylsilyl group and a triethoxysilyl group are preferable. In addiction, a triethoxysilyl group and a diethoxymethylsilyl group are preferable since alcohol produced by the hydrolysis of the reactive silicone group is ethanol and have higher safety.

The reactive silicone group can be introduced by a known method. Examples thereof include the following methods.
(I) An organic polymer having a functional group such as hydroxy group and the like is reacted with an organic compound having an active group reactive with the functional group and an unsaturated group (e.g., saturated group-containing epoxy compound) to give an organic polymer having the unsaturated group. Then, the obtained organic polymer having the unsaturated group is reacted with a hydrosilane compound having a reactive silicone group (hydrosilylation).
(II) An organic polymer containing the unsaturated group, which is obtained in the same manner as in the method of (I), is reacted with a compound having a mercapto group and a reactive silicone group.
(III) An organic polymer having a functional group such as hydroxy group, epoxy group, isocyanate group and the like in a molecule is reacted with a compound having a functional group reactive with the functional group and a reactive silicone group.

In the above methods, the method of (I) and the method of (III) wherein an organic polymer having a hydroxy group on the terminal is reacted with a compound having an isocyanate group and a reactive silicone group are preferable since high conversion ratio is obtained in a comparatively short reaction time. Furthermore, since the organic polymer having a reactive silicone group obtained by the method of (I) has a lower viscosity than the organic polymer obtained by the method of (III), a curable composition having good workability can be obtained by using the polymer, and the organic polymer obtained by the method of (II) has a strong odor due to mercaptosilane, the method of (I) is particularly preferable.

Examples of the hydrosilane compound to be used in the method of (1) include, but are not limited to, halogenated silanes such as trichlorosilane, methyldichlorosilane, dimethylchlorosilane, phenyldichlorosilane and the like; alkoxysilanes such as trimethoxysilane, triethoxysilane, methyldiethoxysilane, methyldimethoxysilane, phenyldimethoxysilane, 1-[2-(trimethoxysilyl)ethyl]-1,1,3,3-tetramethyldisiloxane and the like; acyloxysilanes such as methyldiacetoxysilane, phenyldiacetoxysilane and the like, and the like. Of these, particularly halogenated silanes and alkoxysilanes are preferable, and particularly, alkoxysilanes are most preferable since the obtained curable composition has mild hydrolyzability and is easy to handle. Of alkoxysilanes, methyldimethoxysilane is preferable since it is easily available, and a curable composition containing the obtained organic polymer is high in the curability, storage stability, elongation property, and tensile strength. Trimethoxysilane is particularly preferable from the aspects of the curability and restoration property of the obtained curable composition.

Examples of the method of (II) include, but are not limited to, a method including introducing a compound having a mercapto group and a reactive silicone group into an unsaturated binding site of an organic polymer by a radical addition reaction in the presence of a radical initiator and/or a radical source and the like. Examples of the aforementioned compound having a mercapto group and a reactive silicone group include, but are not limited to, γ-mercaptopropyltrimethoxysilane, γ-mercaptopropylmethyldimethoxysilane, γ-mercaptopropyltriethoxysilane, γ-mercaptopropylmethyldiethoxysilane, mercaptomethyltrimethoxysilane, mercaptomethyltriethoxysilane and the like.

Examples of the method of (III) wherein an organic polymer having a hydroxy group is reacted with a compound having an isocyanate group and a reactive silicone group include, but are not limited to, the method shown in JP-A-3-47825 and the like. Examples of the aforementioned compound having an isocyanate group and a reactive silicone group include, but are not limited to, γ-isocyanatepropyltrimethoxysilane, γ-isocyanatepropylmethyldimethoxysilane, γ-isocyanatepropyltriethoxysilane, γ-isocyanatepropylmethyldiethoxysilane, isocyanatemethyltrimethoxysilane, isocyanatemethyltriethoxysilane, isocyanatemethyldimethoxymethylsilane, isocyanatemethyldiethoxymethylsilane and the like.

In the case of a silane compound wherein three hydrolyzable groups are bonded to one silicon atom such as trimethoxysilane and the like, a disproportionation reaction sometimes proceed. When a disproportionation reaction proceeds, an unstable compound such as dimethoxysilane is produced to make the handling difficult. Such disproportionation reaction does not proceed with γ-mercaptopropyltrimethoxysilane and γ-isocyanatepropyltrimethoxysilane. Therefore, when a group wherein three hydrolyzable groups are bonded to one silicon atom, such as trimethoxysilyl group and the like, is used as a silicon-containing group, the method of (II) or (III) is preferably used.

On the other hand, a silane compound represented by the formula (2):

H-(SiR²₂O)ₘSiR²₂-R³-SiX₃ (2)

wherein X is as defined above, each R² in the number of 2m+2 is independently a hydrocarbon group, R³ is a divalent organic group, and m is an integer of 0 - 19
is free of progress of a disproportionation reaction. Therefore, when a group wherein three hydrolyzable groups are bonded to one silicon atom is introduced in the method of (I), a silane compound represented by the formula (2) is preferably used. From the aspects of availability and cost, each R² in the number of 2m+2 is independently preferably a hydrocarbon group having 1 - 2 carbon atoms, more preferably a hydrocarbon group having 1 - 8 carbon atoms, further preferably a hydrocarbon group having 1 - 4 carbon atoms. From the aspects of availability and cost, R³ is preferably a divalent hydrocarbon group having 1 - 12 carbon atoms, more preferably a divalent hydrocarbon group having 2 - 8 carbon atoms, further preferably a divalent hydrocarbon group having 2 carbon atoms. From the aspects of availability and cost, m is preferably 1. Examples of the silane compound represented by the formula (2) include 1-[2-(trimethoxysilyl)ethyl]-1,1,3,3-tetramethyldisiloxane, 1-[2-(trimethoxysilyl)propyl]-1,1,3,3-tetramethyldisiloxane, 1-[2-(trimethoxysilyl)hexyl]-1,1,3,3-tetramethyldisiloxane and the like.

The organic polymer having a reactive silicone group may be linear or branched. The number average molecular weight (Mn) of an organic polymer having a reactive silicone group is a value measured by GPC (based on polystyrene), preferably 1,000 - 100,000, more preferably 2,000 - 50,000, particularly preferably 3,000 - 30,000. When the number average molecular weight is less than 1,000, elongation of the cured product tends to be insufficient, and when it exceeds 100,000, the curable composition has high viscosity, which tends to be inconvenient in terms of workability. The molecular weight distribution (Mw/Mn) of an organic polymer having a reactive silicone group as measured by GPC is preferably not more than 2, more preferably not more than 1.5, further preferably not more than 1.4.

To obtain a rubbery cured product showing high strength, high elongation and low elastic modulus, the number of the reactive silicone group contained in an organic polymer is preferably 1 or more, more preferably 1.1 - 5, further preferably 1.1 - 3, particularly preferably 1.1 - 2, on average in 1 molecule. When the number of the reactive silicone group contained in a molecule is less than 1 on average, the curability becomes insufficient, and a cured product having good rubber elasticity behavior is difficult to obtain. The reactive silicone group may be present on the main chain terminal or the side chain terminal of the organic polymer, or both of them. Particularly, when the reactive silicone group is present only on the main chain terminal, a rubbery cured product showing high strength, high elongation and low elastic modulus is easily obtained, since the effective network length in the finally-formed cured product becomes long.

The aforementioned polyoxyalkylene-based polymer is a polymer essentially having a repeat unit represented by the formula (3):

-R⁴-O- (3)

wherein R⁴ is a linear or branched alkylene group having 1 - 14 carbon atoms. R⁴ in the formula (3) is preferably a linear or branched alkylene group having 1 - 4 (more preferably 2 - 4) carbon atoms. Examples of the repeat unit represented by the formula (3) include -CH₂O-, -CH₂CH₂O- -CH₂CH(CH₃)O-,-CH₂CH(C₂H₅)O-, -CH₂C(CH3)₂O-, -CH₂CH₂CH₂CH₂O- and the like. The main chain of the polyoxyalkylene-based polymer may be composed of only one kind of repeat unit or two or more kinds of repeat units. Particularly, when the curable composition of the present invention is used as a sealant and the like, the main component of the organic polymer of component (A) is preferably an amorphous and comparatively low viscous polyoxypropylene-based polymer.

Examples of the synthesis method of the polyoxyalkylene-based polymer include, but are not limited to, a polymerization method using an alkali catalyst such as KOH and the like, the polymerization method shown in JP-A-61-215623, which uses a transition metal compound-porphyrin complex catalyst such as a complex obtained by reaction of an organic aluminum compound and porphyrin, the polymerization methods shown in JP-B-46-27250, JP-B-59-15336, US 3278457, US 3278458, US 3278459, US 3427256, US 3427334, US 3427335 and the like, which use a double-metal cyanide catalyst (e.g., zinc hexacyanocobaltate glyme complex catalyst), the polymerization method shown in JP-A-10-273512, which uses a catalyst composed of a polyphosphagen salt, the polymerization method shown in JP-A-11-060722, which uses a catalyst composed of a phosphagen compound and the like.

Examples of the polyoxyalkylene-based polymer having a reactive silicone group include, but are not limited to, those proposed in JP-B-45-36319, JP-B-46-12154, JP-A-50-156599, JP-A-54-6096, JP-A-55-13767, JP-A-55-13468, JP-A-57-164123, JP-B-3-2450, US 3632557, US 4345053, US 4366307, US 4960844 and the like, the polyoxyalkylene-based polymers proposed in JP-A-61-197631, JP-A-61-215622, JP-A-61-215623, JP-A-61-218632, JP-A-3-72527, JP-A-3-47825, JP-A-8-231707 and having a number average molecular weight (Mn) of 6,000 or more and a molecular weight distribution (Mw/Mn) of 1.6 or less, and the like. The above-mentioned polyoxyalkylene-based polymer having a reactive silicone group may be used alone, or two or more kinds thereof may be used in combination.

The aforementioned saturated hydrocarbon-based polymer is a polymer free of an aliphatic unsaturated bond. The saturated hydrocarbon-based polymer optionally has an aromatic ring (i.e., optionally having an aromatic double bond). The saturated hydrocarbon-based polymer can be obtained by a method including (1) polymerizing an olefin-based compound having 2 - 6 carbon atoms such as ethylene, propylene, 1-butene, isobutylene and the like as a main monomer, (2) homopolymerizing a diene compound such as butadiene, isoprene and the like or copolymerizing same with the above-mentioned olefin-based compound, followed by hydrogenation and the like. Isobutylene-based polymer and hydrogenated polybutadiene-based polymer are preferable, since a functional group is easily introduced into the terminal, the molecular weight is easily controlled, and the average number of the terminal functional groups in one molecule can be increased, and an isobutylene-based polymer is particularly preferable. A saturated hydrocarbon-based polymer having a reactive silicone group, wherein the main chain is constituted of a saturated hydrocarbon-based polymer, is superior in heat resistance, weatherability, durability and moisture barrier property.

The isobutylene-based polymer may have all monomer units formed from an isobutylene unit, or a copolymer with other monomer. In view of rubber property, preferable one contains 50 wt% or more, more preferable one contains 80 wt% or more, and particularly preferable one contains 90 - 99 wt%, of a repeat unit derived from isobutylene.

As a synthesis method of a saturated hydrocarbon-based polymer, various polymerization methods have conventionally been reported. Particularly, many living polymerizations have been developed in recent years. Saturated hydrocarbon-based polymer, particularly an isobutylene-based polymer, can be easily produced by the inifer polymerization found by Kennedy et al. (J.P. Kennedy et al., J. Polymer Sci., Polymer Chem. Ed. 1997, viol. 15, page 2843), and one having a number average molecular weight of about 1,000 - 100,000 and a molecular weight distribution of not more than 1.5 can be polymerized, and various functional groups can be introduced into a molecular terminal.

Examples of the production method of a saturated hydrocarbon-based polymer having a reactive silicone group include, but are not limited to, the methods described in JP-B-4-69659, JP-B-7-108928, JP-A-63-254149, JP-A-64-22904, JP-A-1-197509, JP-B-2539445, JP-B-2873395, JP-A-7-53882 and the like. The above-mentioned saturated hydrocarbon-based polymer having a reactive silicone group may be used alone or two or more kinds thereof may be used in combination.

As the (meth)acrylate-based monomer constituting the main chain of the aforementioned (meth)acrylate-based polymer is not particularly limited, various ones can be used. Examples of the monomer include (meth)acrylic acid-based monomers such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-((meth)acryloyloxy)propyltrimethoxysilane, γ-((meth)acryloyloxy)propyldimethoxymethylsilane, (meth)acryloyloxymethyltrimethoxysilane, (meth)acryloyloxymethyltriethoxysilane, (meth)acryloyloxymethyldimethoxymethylsilane, (meth)acryloyloxymethyldiethoxymethylsilane, ethylene oxide adduct of (meth)acrylate and the like.

In the aforementioned (meth)acrylate-based polymer, the following vinyl monomers can also be copolymerized with (meth)acrylate-based monomers. Examples of the vinyl monomer include styrene-based monomers such as styrene, vinyltoluene, α-methylstyrene, chlorostyrene, styrene sulfonic acid and a salt thereof and the like; silicon containing vinyl monomers such as vinyltrimethoxysilane, vinyltriethoxysilane and the like; maleic anhydride, maleic acid, monoalkyl ester and dialkyl ester of maleic acid; fumaric acid, monoalkyl ester and dialkyl ester of fumaric acid; maleimide-based monomers such as maleimide, methylmaleimide, ethylmaleimide, propylmaleimide, butylmaleimide, hexylmaleimide, octylmaleimide, dodecylmaleimide, stearylmaleimide, phenylmaleimide, cyclohexylmaleimide and the like; nitrile group-containing vinyl monomers such as acrylonitrile, methacrylonitrile and the like; amido group-containing vinyl monomers such as acrylamide, methacrylamide and the like; vinyl esters such as vinyl acetate, vinyl propionate, vinyl pivalate, vinyl benzoate, vinyl cinnamate and the like; alkenes such as ethylene, propylene and the like; conjugated dienes such as butadiene, isoprene and the like; vinyl chloride, vinylidene chloride, allyl chloride, allylalcohol and the like. These may be used alone or a plurality thereof may be copolymerized.

As the (meth)acrylate-based polymer, from the aspects of property and the like, a polymer composed of a (meth)acrylate monomer and a polymer composed of a styrene-based monomer and (meth)acrylic acid-based monomer are preferable, a polymer composed of a (meth)acrylate monomer is more preferable, and a polymer composed of an acrylate monomer is further preferable.

In general building use and the like requesting properties such as low viscosity of a blend, low modulus, high elongation, weather resistance, heat resistance and the like of a cured product, butyl acrylate is a preferable monomer for constituting a (meth)acrylate-based polymer. On the other hand, in automobile use and the like requesting oil resistance and the like, a copolymer mainly comprising ethyl acrylate is preferable as the (meth)acrylate-based polymer. While the copolymer mainly comprising ethyl acrylate is superior in oil resistance, it tends to show rather inferior low temperature property (cold resistance). To improve the low temperature property, it is possible to replace a part of the ethyl acrylate with butyl acrylate. However, since the good oil resistance thereof decreases as the ratio of butyl acrylate increases, for use requesting oil resistance, the ratio of butyl acrylate is preferably 40 wt% or less, more preferably 30 wt% or less. To improve the low temperature property and the like without impairing the oil resistance, a monomer wherein oxygen is introduced into an alkyl group on the side chain

(e.g., 2-methoxyethyl acrylate, 2-ethoxyethyl acrylate etc.) is preferably used. However, since introduction of an alkoxy group having an ether bond in the side chain tends to degrade the heat resistance of the copolymer, when heat resistance is requested, the ratio of a monomer wherein oxygen is introduced into an alkyl group on the side chain is preferably 40 wt% or less. A suitable polymer can be obtained by changing the ratio of the monomer to be used in consideration of the requested properties such as oil resistance, heat resistance, low temperature property and the like according to various uses and the requested object. Examples of the copolymer superior in the balance of properties such as oil resistance, heat resistance, low temperature property and the like include ethyl acrylate/butyl acrylate/2-methoxyethyl acrylate (40 - 50/20 - 30/30 - 20 in weight ratio) copolymer. In the present invention, butyl acrylate, ethyl acrylate, 2-methoxyethyl acrylate, 2-ethoxyethyl acrylate may be copolymerized with other monomer, and further block copolymerized, in which case 40 wt% or more of butyl acrylate, ethyl acrylate, 2-methoxyethyl acrylate, 2-ethoxyethyl acrylate is preferably contained.

The synthesis method of the (meth)acrylate-based polymer is not particularly limited, and a known method can be used. However, a polymer obtained by a general free radical polymerization method using an azo compound, peroxide and the like as a polymerization initiator is associated with a problem of molecular weight distribution values which are generally greater than 2 and high viscosity. Therefore, to obtain a (meth)acrylate-based polymer having a narrow molecular weight distribution, low viscosity, and a crosslinking functional group at a high ratio on the molecular chain terminal, the living radical polymerization method is preferably used.

Of the "living radical polymerization method", the "atom transfer radical polymerization" including polymerizing a (meth)acrylate-based monomer by using an initiator such as organic halide, a halogenated sulfonyl compound or the like, and a transition metal complex as a catalyst is more preferable as a production method of a (meth)acrylate-based polymer having a particular functional group, since it has, in addition to the characteristics of the above-mentioned "living radical polymerization method", a halogen and the like comparatively advantageous for the functional group conversion reaction on the terminal and a high degree of freedom in the design of initiator and catalyst. The atom transfer radical polymerization is described in, for example, Matyjaszewski et al., Journal of the American Chemical Society (J. Am. Chem. Soc.) 1995, vol. 117, page 5614 and the like.

Examples of the production method (meth)acrylate-based polymer having a reactive silicone group include production methods using a free radical polymerization method using a chain transfer agent, which are disclosed in JP-B-3-14068, JP-B-4-55444, JP-A-6-211922 and the like. In addition, examples thereof include, but are not limited to, the production method using atom transfer radical polymerization disclosed in JP-A-9-272714 and the like. The above-mentioned (meth)acrylate-based polymer having a reactive silicone group may be used alone, or two or more kinds thereof may be used in combination.

These organic polymers having a reactive silicone group may be used alone or two or more kinds may be used in combination. Specifically, a mixture of two or more kinds of organic polymers selected from the group consisting of a polyoxyalkylene-based polymer having a reactive silicone group, a saturated hydrocarbon-based polymer having a reactive silicone group, and a (meth)acrylate-based polymer having a reactive silicone group can also be used.

The production methods of a mixture of organic polymers of a polyoxyalkylene-based polymer having a reactive silicone group and a (meth)acrylate-based polymer having a reactive silicone group are proposed in, but are not limited to, JP-A-59-122541, JP-A-63-112642, JP-A-6-172631, JP-A-11-116763 and the like. Examples of the preferable production method of the (meth)acrylate-based polymer include a production method including blending a copolymer having a reactive silicone group, wherein the molecular chain is substantially composed of a (meth)acrylate monomer unit represented by the following formula (4):

-CH₂-C(R⁵)(COOR⁶)- (4)

wherein R⁵ is a hydrogen atom or a methyl group and R⁶ is an alkyl group having 1 - 8 carbon atoms, and
a (meth)acrylate monomer unit represented by the following formula (5):

-CH₂-C(R⁵)(COOR⁷)- (5)

wherein R⁵ is as defined above and R⁷ is an alkyl group having 9 or more carbon atoms,
with a polyoxyalkylene-based polymer having a reactive silicone group.

Examples of R⁶ in the aforementioned formula (4) include an alkyl group having 1 - 8, preferably 1 - 4, further preferably 1 or 2, carbon atoms such as methyl group, ethyl group, propyl group, n-butyl group, t-butyl group, 2-ethylhexyl group and the like. The alkyl group for R⁶ may be one kind or two or more kinds.

Examples of R⁷ in the aforementioned formula (5) include an alkyl group having 9 or more, preferably 10 - 30, more preferably 10 - 20, carbon atoms, such as nonyl group, decyl group, lauryl group, tridecyl group, cetyl group, stearyl group, behenyl group and the like. Like R⁶, the alkyl group for R⁷ may be one kind or two or more kinds.

The molecular chain of the aforementioned preferable (meth)acrylate-based polymer is substantially composed of the monomer units of the formula (4) and the formula (5). The "substantially" here means that the total monomer units of the formula (4) and the formula (5) present in the polymer exceed 50 wt%. The total monomer units of the formula (4) and the formula (5) are preferably 70 wt% or more.

The abundance ratio of the monomer unit of the formula (4) and the monomer unit of the formula (5) 95:5 - 40:60 is preferable, 90:10 - 60:40 is more preferable in the weight ratio. Examples of the monomer unit other than the formula (4) and the formula (5), which is optionally contained in the aforementioned preferable (meth)acrylate-based polymer, include monomer unit derived from (meth)acrylic acid; monomer containing an amido group such as (meth)acrylamide, N-methylol (meth)acrylamide and the like; monomer containing an epoxy group such as glycidyl (meth)acrylate and the like; monomer containing an amino group such as diethylaminoethyl (meth)acrylate, aminoethyl vinyl ether and the like; and acrylonitrile, styrene, α-methylstyrene, alkylvinylether, vinyl chloride, vinyl acetate, vinyl propionate, ethylene and the like.

Mixtures of organic polymers of a saturated hydrocarbon-based polymer having a reactive silicone group and a (meth)acrylate-based polymer having a reactive silicone group are proposed in, but are not limited to, JP-A-1-168764, JP-A-2000-186176 and the like.

As a production method of a mixture of organic polymers of (meth)acrylate-based polymer having a reactive silicon functional group, a method including polymerization of a (meth)acrylate-based monomer in the presence of an organic polymer having a reactive silicone group can be utilized. This production method is specifically disclosed in, but is not limited to, JP-A-59-78223, JP-A-59-168014, JP-A-60-228516, JP-A-60-228517 and the like.

The main chain of the organic polymer may contain a urethane bond and/or a urea bond as long as the effect of the present invention is not greatly impaired. The aforementioned urethane bond and/or urea bond are/is bond(s) containing an amido segment represented by the formula (6):

-NR⁸-C(=O)- (6)

wherein R⁸ is an organic group or a hydrogen atom, which is formed, for example, by the reaction of an isocyanate group and an active hydrogen group. Since the amido segment has a comparatively high polarity, when an organic polymer containing same is used, the strength of the obtained cured product and adhesiveness to a substrate tend to be high.

Examples of the amido segment represented by the formula (6) include one formed by a reaction of isocyanate group and hydroxy group, one formed by a reaction of isocyanate group and amino group, one formed by a reaction of isocyanate group and mercapto group and the like. In addition, one formed by a reaction of the aforementioned amido segment containing an active hydrogen atom and isocyanate group is also included in the amido segment represented by the formula (6).

As an industrially feasible production method of an organic polymer having an amido segment and a reactive silicone group, for example, one produced by a method including reacting an excess polyisocyanate compound with an organic polymer having an active hydrogen-containing group on the terminal to give a polymer having an isocyanate group on the terminal of a polyurethane-based main chain, and then or simultaneously, reacting the whole or a part of the isocyanate group with W group of the silicon compound represented by the formula (7):

W-R⁹-SiR¹₃₋ₐXₐ (7)

wherein R¹, X and a are as defined above, R⁹ is a divalent organic group, more preferably a hydrocarbon group having 1 - 20 carbon atoms, and W is an active hydrogen-containing group selected from hydroxy group, carboxy group, mercapto group and amino group (primary or secondary) can be mentioned. Examples of the document relating to this production method include JP-B-46-12154 (US 3632557), JP-A-58-109529 (US 4374237), JP-A-62-13430 (US 4645816), JP-A-8-53528 (EP 0676403), JP-A-10-204144 (EP 0831108), JP-A-2003-508561 (US 6197912), JP-A-6-211879 (US 5364955), JP-A-10-53637 (US 5756751), JP-A-11-100427, JP-A-2000-169544, JP-A-2000-169545, JP-A-2002-212415, JP-B-3313360, US 4067844, US 3711445, JP-A-2001-323040 and the like.

As an organic polymer having an amido segment and a reactive silicone group, for example, a polymer produced by reacting an organic polymer having an active hydrogen-containing group on the terminal with a reactive silicone group-containing isocyanate compound represented by the formula (8) :

O=C=N-R⁹-SiR¹₃₋ₐXₐ (8)

wherein R⁹, R¹, X and a are as defined above, can be mentioned. Examples of the document relating to this production method include JP-A-11-279249 (US 5990257), JP-A-2000-119365 (US 6046270), JP-A-58-29818 (US 4345053), JP-A-3-47825 (US 5068304), JP-A-11-60724, JP-A-2002-155145, JP-A-2002-249538, WO 03/018658, WO 03/059981 and the like.

Examples of the organic polymer having an active hydrogen-containing group on the terminal include an oxyalkylene polymer having a hydroxy group on the terminal (polyether polyol), polyacrylic polyol, polyester polyol, a saturated hydrocarbon-based polymer having a hydroxy group on the terminal (polyolefin polyol), polythiol compound, polyamine compound and the like. Of these, polyether polyol, polyacrylic polyol, and polyolefin polyol are preferable since the glass transition temperature of the obtained organic polymer is comparatively low, and the obtained cured product is superior in cold resistance. Particularly, polyether polyol is particularly preferable since the obtained organic polymer shows low viscosity and good workability, and the curable composition shows good depth curability and good adhesiveness of the cured product. In addition, polyacrylic polyol and saturated hydrocarbon-based polymer are more preferable since the obtained cured product shows good weatherability and heat resistance.

As polyether polyol, one produced by any production method can be used. One having at least 0.7 hydroxy group per molecule terminal on molecule average is preferable. Examples of the polyether polyol include a polyoxyalkylene-based polymer produced by using a conventional alkali metal catalyst, a polyoxyalkylene-based polymer produced by reacting an initiator such as a polyhydroxy compound having at least two hydroxy groups and the like with alkylene oxide in the presence of a double metal cyanide complex or cesium, and the like.

Of the above-mentioned polymerization methods, a polymerization method using a double metal cyanide complex is preferable since an oxyalkylene polymer having a lower degree of unsaturation, low Mw/Mn, lower viscosity, high acid resistance, and high weatherability can be obtained.

As the aforementioned polyacrylic polyol a polyol having a (meth)alkyl acrylate (co)polymer as a main chain, and having a hydroxy group in a molecule can be mentioned. The synthesis method of this polymer is preferably the living radical polymerization method, more preferably atom transfer radical polymerization, since the molecular weight distribution is narrow and low viscosity can be achieved. In addition, a polymer obtained by continuous bulk polymerization of the alkyl acrylate-based monomer at a high temperature and high pressure as described in JP-A-2001-207157 (obtained by SGO process) is preferably used. Specifically, ARUFON UH-2000 manufactured by Toagosei Co., Ltd. and the like can be mentioned.

Examples of the aforementioned polyisocyanate compound include aromatic polyisocyanates such as toluene(tolylene) diisocyanate, diphenylmethane diisocyanate, xylylene diisocyanate and the like; aliphatic polyisocyanates such as isophorone diisocyanate, hexamethylene diisocyanate and the like.

Examples of the silicon compound represented by the formula (7) include, but are not particularly limited to, amino group-containing silanes such as γ-aminopropyltrimethoxysilane, N-(β-aminoethyl)-γ-aminopropyltrimethoxysilane, (N-phenyl)-γ-aminopropyltrimethoxysilane, N-ethylaminoisobutyltrimethoxysilane, N-cyclohexylaminomethyltriethoxysilane, N-cyclohexylaminomethyldiethoxymethylsilane, N-phenylaminomethyltrimethoxysilane and the like; hydroxy group-containing silanes such as γ-hydroxypropyltrimethoxysilane and the like; mercapto group-containing silanes such as γ-mercaptopropyltrimethoxysilane and the like; and the like. As described in JP-A-6-211879 (US 5364955), JP-A-10-53637 (US 5756751), JP-A-10-204144 (EP 0831108), JP-A-2000-169544, JP-A-2000-169545, a Michael addition reaction product of various α,β-unsaturated carbonyl compounds and a primary amino group-containing silane, and a Michael addition reaction product of various (meth)acryloyl group-containing silanes and a primary amino group-containing compound can also be used as a silicon compound represented by the formula (7).

Examples of the reactive silicone group-containing isocyanate compound represented by the formula (8) include, but are not particularly limited to, γ-trimethoxysilylpropylisocyanate, γ-triethoxysilylpropylisocyanate, γ-methyldimethoxysilylpropylisocyanate, γ-methyldiethoxysilylpropylisocyanate, trimethoxysilylmethylisocyanate, triethoxymethylsilylmethylisocyanate, dimethoxymethylsilylmethylisocyanate, diethoxymethylsilylmethylisocyanate and the like. As described in JP-A-2000-119365 (US 6046270), a compound obtained by reacting a silicon compound of the formula (7) with an excess amount of the aforementioned polyisocyanate compound can also be used as a reactive silicone group-containing isocyanate compound represented by the formula (8).

In a preferable embodiment, the organic polymer of component (A) is at least one selected from the group consisting of a polyoxyalkylene-based polymer, a saturated hydrocarbon-based polymer and a (meth)acrylate-based polymer, which has at least one silicon-containing group selected from the group consisting of a trimethoxysilyl group, a triethoxysilyl group, a dimethoxymethylsilyl group, a (methoxymethyl)dimethoxysilyl group and a methyldimethoxysilyl group in the number of 1.1 - 5 on average in 1 molecule and a number average molecular weight of 1,000 - 100,000. In the description of the preferable embodiment, a limitation (modifier) on the aforementioned silicon-containing group and number average molecular weight modifies all of the polyoxyalkylene-based polymer, saturated hydrocarbon-based polymer and (meth)acrylate-based polymer.

In a more preferable embodiment, the organic polymer of component (A) is at least one selected from the group consisting of a polyoxyalkylene-based polymer and a (meth)acrylate-based polymer, which has at least one silicon-containing group selected from the group consisting of a trimethoxysilyl group, a (methoxymethyl)dimethoxysilyl group and a methyldimethoxysilyl group, in the number of 1.1 - 3 on average in 1 molecule and a number average molecular weight of 2,000 - 50,000. In the description of the more preferable embodiment, a limitation (modifier) on the aforementioned silicon-containing group and number average molecular weight modifies both the polyoxyalkylene-based polymer and (meth)acrylate-based polymer.

In a more preferable embodiment, the organic polymer of component (A) is a polyoxyalkylene-based polymer having 1.1 - 2 trimethoxysilyl groups on average in 1 molecule and a number average molecular weight of 3,000 - 30,000.

In a particularly preferable embodiment, the organic polymer of component (A) is a polyoxypropylene-based polymer having 1.1 - 2 triethoxysilyl groups on average in 1 molecule and a number average molecular weight of 3,000 - 30,000.

### <component (B)>

In the present invention, a diester compound obtained from polyethylene glycol and aliphatic monocarboxylic acid and/or alicyclic monocarboxylic acid is used as component (B). Component (B) acts as a plasticizer. By the addition of component (B), viscosity and slump property of curable composition, and mechanical properties such as tensile strength, elongation and the like of a cured product obtained by curing the composition can be adjusted. Furthermore, using component (B), depth curability of a one-component curable composition is improved (i.e., rapidly cured to the deep part) as compared to the use of a general phthalate-based plasticizer, and a decrease in the curability after storage can be prevented. In addition, component (B) is gentle on the environment, different from the phthalate-based compounds considered to be environmental hormone, and shows a small adverse influence on the human body.

Examples of the polyethylene glycol constituting component (B) include diethylene glycol, triethylene glycol, tetraethylene glycol, pentaethylene glycol, hexaethylene glycol, heptaethylene glycol, octaethylene glycol, nonaethylene glycol, decaethylene glycol and the like. These may be used alone or a plurality thereof may be used in combination. Since the viscosity of polyethylene glycol increases as the degree of polymerization thereof becomes higher, diethylene glycol, triethylene glycol, tetraethylene glycol, and pentaethylene glycol are preferable. Triethylene glycol is particularly preferable since it has high safety and comparatively low viscosity, and is easily available.

Aliphatic monocarboxylic acid and alicyclic monocarboxylic acid constituting component (B) preferably has 3 - 20, further preferably 4 - 18, particularly preferably 6 - 12, carbon atoms. When the number of carbon atoms is not more than 2, a diester compound as component (B) has a low molecular weight and component (B) in a cured product shows a strong tendency toward migration. On the other hand, when the number of carbon atoms is 21 or more, a diester compound as component (B) easily becomes solid and the action as a plasticizer is not sufficient exhibited.

Examples of the aliphatic monocarboxylic acid include propanoic acid, butanoic acid, pentanoic acid, hexanoic acid, heptanoic acid, octanoic acid, 2-ethylhexanoic acid, nonanoic acid, decanoic acid, dodecanoic acid, 2-hydroxypropanoic acid. Examples of the alicyclic monocarboxylic acid include cyclohexanecarboxylic acid, cyclopentenylacetic acid. These may be used alone or a plurality thereof may be used. Aliphatic monocarboxylic acid is preferable since it is superior to alicyclic carboxylic acid in the compatibility with component (A). Aliphatic monocarboxylic acid may be a straight chain or branched chain. Alicyclic monocarboxylic acid may be saturated or unsaturated. Examples of the saturated alicyclic monocarboxylic acid include cyclohexanecarboxylic acid. Examples of the unsaturated alicyclic monocarboxylic acid include cyclopentenylacetic acid.

When a diester compound of polyethylene glycol and aromatic carboxylic acid (e.g., diethylene glycol dibenzoate) and component (A) are used in combination in a one-component curable composition, the curability of the composition after storage is markedly degraded. Therefore, it is preferable that a diester compound of polyethylene glycol and aromatic carboxylic acid be not used in the curable composition of the present invention.

Examples of component (B) include, but are not particularly limited to, triethylene glycol bis(2-ethylhexanoate), diethylene glycol dibutyrate, diethylene glycol dihexanoate, diethylene glycol bis(2-ethylhexanoate), diethylene glycol dioctoate, diethylene glycol bis(2-propylheptanoate), diethylene glycol dicyclohexanoate, triethylene glycol dibutyrate, triethylene glycol dihexanoate, triethylene glycol dioctoate, triethylene glycol bis(2-propylheptanoate), triethylene glycol dicyclohexanoate, tetraethylene glycol dibutyrate, tetraethylene glycol dihexanoate, tetraethylene glycol bis(2-ethylhexanoate), tetraethylene glycol dioctoate, tetraethylene glycol bis(2-propylheptanoate), tetraethylene glycol dicyclohexanoate, pentaethylene glycol dibutyrate, pentaethylene glycol dihexanoate, pentaethylene glycol bis(2-ethylhexanoate), pentaethylene glycol dioctoate, pentaethylene glycol bis(2-propylheptanoate), pentaethylene glycol dicyclohexanoate, oligoethylene glycol bis(2-ethylhexanoate) and the like.

Of the aforementioned components (B), triethylene glycol bis(2-ethylhexanoate) is particularly preferable since it is widely used as a plasticizer for a resin constituting an interlay for laminate glass and easily available. Triethylene glycol bis(2-ethylhexanoate) is available from OXEA under the trade name: OXSOFT 3G8, from Celanese under the trade name: WVC 3800, from DOW CHEMICAL under the trade name: Flexol 3GO, and from EASTMAN under the trade name: Eastman TEG-EH Plasticizer.

The molecular weight of component (B) is preferably not more than 500, more preferably not more than 450. When the molecular weight of component (B) exceeds 500, the curable composition tends to show higher viscosity and degraded workability.

It is preferable that component (B) be substantially free of a hydroxy group, namely, the hydroxyl value of component (B) is not more than 10 mgKOH/g, more preferably not more than 5 mgKOH/g. When the hydroxy group remains, the curability of the curable composition after storage tends to decrease largely. Therefore, the reaction of polyethylene glycol and aliphatic monocarboxylic acid and/or alicyclic monocarboxylic acid is preferably performed under conditions reducing the residual hydroxy groups.

Component (B) may be used alone, or two or more kinds thereof may be used in combination. The amount of component (B) is preferably 21 - 300 parts by weight, more preferably 30 - 200 parts by weight, further preferably 40 - 100 parts by weight, per 100 parts by weight of the organic polymer of component (A). When the amount of component (B) is less than 21 parts by weight, a sufficient rate of depth curability cannot be achieved. On the other hand, when the amount of component (B) exceeds 300 parts by weight, adhesiveness of the cured product to a substrate may decrease or surface weatherability of the cured product tends to decrease.

In the present invention, a plasticizer other than the above-mentioned component (B) may be used. Examples of the plasticizer other than component (B) include phthalates such as dimethyl phthalate, diethyl phthalate, dibutyl phthalate, diisobutyl phthalate, dinormalhexyl phthalate, bis(2-ethylhexyl) phthalate, dinormaloctyl phthalate, diisononyl phthalate, dinonyl phthalate, diisodecyl phthalate, diisoundecyl phthalate, bisbutylbenzyl phthalate and the like; nonaromatic dibasic acid esters such as dioctyl adipate, dioctyl sebacate, dibutyl sebacate, diisodecyl succinate and the like; aliphatic esters butyl oleate, methyl acetylricinolate and the like; phosphates such as tricresyl phosphate, tributyl phosphate and the like; trimellitic acid esters; chlorinated paraffins; hydrocarbon oils such as alkyldiphenyl, partially hydrogenated terphenyl, and the like; process oils; epoxy plasticizers such as epoxydized soybean oil, benzyl epoxystearate and the like. A compound obtained by hydrogenaration of a phthalate compound can also be used. For example, diisononyl cyclohexane dicarboxylate obtained by hydrogenation of diisononyl phthalate is commercially available under the trade name Hexamoll DINCH, and can be used preferably.

In addition, a polymer plasticizer can be used. When a polymer plasticizer is used, the initial property of a cured product can be maintained for a long term as compared to use of a low molecular weight plasticizer. Furthermore, when a polymer plasticizer is used and alkyd paint is applied to a cured product obtained from a curable composition, drying performance (also referred to as coatability) of the paint can be improved. As used herein, the polymer plasticizer means a plasticizer having a number average molecular weight of 1,000 or more.

Examples of the polymer plasticizer include, but are not limited to, vinyl polymers obtained by polymerization vinyl monomers by various methods; polyalkylene glycol esters such as diethylene glycol dibenzoate, triethylene glycol dibenzoate, pentaerythritol ester and the like; polyesters obtained from dibasic acids such as sebacic acid, adipic acid, azelaic acid, phthalic acid and the like, and divalent alcohols such as ethylene glycol, diethylene glycol, triethylene glycol, propylene glycol, dipropylene glycol and the like; polyether polyols such as polyethylene glycol, polypropylene glycol, polytetramethylene glycol and the like having a molecular weight of 1,000 or more (preferably 1,500 or more); polyether polyol derivative wherein hydroxy group of polyether polyols is converted to ester group, ether group and the like (excluding diester compound obtained from polyethylene glycol and aliphatic monocarboxylic acid and/or alicyclic monocarboxylic acid); polystyrenes such as polystyrene, poly-α-methylstyrene and the like; polybutadiene, polybutene, polyisobutylene, butadiene-acrylonitrile copolymer, polychloroprene and the like.

Of the above-mentioned polymer plasticizers, one having compatibility with the organic polymer of component (A) is preferable. In view thereof, polyether polyols, polyether polyol derivative, vinyl polymers are preferable. In addition, use of polyether polyols or polyether polyol derivative as a plasticizer is preferable since surface curability and depth curability are improved, and curing retardation after storage does not occur. Of these, polypropylene glycol is more preferable. From the aspects of compatibility, weatherability, and heat resistance, vinyl polymers are preferable. Of the vinyl polymers, (meth)acrylate-based polymers are preferable, and acrylate-based polymers such as poly(alkyl acrylate) and the like are more preferable. The synthesis method of the polymer is preferably the living radical polymerization method, more preferably the atom transfer radical polymerization, since the molecular weight distribution is narrow, and low viscosity can be achieved. In addition, a polymer obtained by continuous bulk polymerization of the alkyl acrylate-based monomer at a high temperature and high pressure as described in JP-A-2001-207157 (obtained by SGO process) is preferably used.

The number average molecular weight of the polymer plasticizer is preferably 1000 - 15000, more preferably 1100 - 10000, further preferably 1200 - 8000, particularly preferably 1300 - 5000, most preferably 1500 - 3000. When the number average molecular weight is too low, the polymer plasticizer flows out over time due to heat and rainfall, the initial properties of the cured product cannot be maintained over a long term, and alkyl coatability cannot be improved. When the number average molecular weight is too high, the curable composition shows high viscosity and low workability. While the molecular weight distribution (Mw/Mn) of the polymer plasticizer is not particularly limited, less than 1.80 is preferable, not more than 1.70 is more preferable, not more than 1.60 is still more preferable, not more than 1.50 is further preferable, not more than 1.40 is particularly preferable, not more than 1.30 is most preferable. The number average molecular weight (Mn) is measured by GPC method in the case of a vinyl polymer, and by terminal analysis in the case of a polyether-based polymer. The molecular weight distribution (Mw/Mn) is measured by GPC method (based on polystyrene) in the case of vinyl polymer and polyether-based polymer.

The polymer plasticizer may have a reactive silicone group. When a reactive silicone group is present, it acts as a reactive plasticizer, and prevents transfer of plasticizer from the cured product. When the polymer plasticizer has a reactive silicone group, the number of reactive silicone group per 1 molecule is preferably not more than 1, more preferably 0.8 on average. When a polymer plasticizer having a reactive silicone group, particularly an oxyalkylene polymer having a reactive silicone group or an acrylic polymer having a reactive silicone group is used, the number average molecular weight thereof needs to be lower than that of the polymer of component (A).

Plasticizer other than component (B) may be used alone or two or more kinds thereof may be used in combination. A low molecular weight plasticizer and a polymer plasticizer may be used in combination. These plasticizers can also be added during production of the organic polymer of component (A). When a plasticizer other than component (B) is used, the amount thereof is preferably 5 - 150 parts by weight, more preferably 10 - 120 parts by weight, further preferably 20 - 100 parts by weight, per 100 parts by weight of the organic polymer of component (A). When the amount is less than 5 parts by weight, the effect of the plasticizer other than component (B) is not sufficiently exerted and when it exceeds 150 parts by weight, the mechanical strength of the cured product becomes insufficient. To sufficiently exert the effect of the present invention, component (B) alone is used as a plasticizer, i.e., the plasticizer preferably consists of component (B).

In a preferable embodiment, the diester compound of component (B) is at least one selected from the group consisting of triethylene glycol bis(2-ethylhexanoate), diethylene glycol dibutyrate, diethylene glycol dihexanoate, diethylene glycol bis(2-ethylhexanoate), diethylene glycol dioctoate, diethylene glycol bis(2-propylheptanoate), diethylene glycol dicyclohexanoate, triethylene glycol dibutyrate, triethylene glycol dihexanoate, triethylene glycol dioctoate, triethylene glycol bis(2-propylheptanoate), triethylene glycol dicyclohexanoate, tetraethylene glycol dibutyrate, tetraethylene glycol dihexanoate, tetraethylene glycol bis(2-ethylhexanoate), tetraethylene glycol dioctoate, tetraethylene glycol bis(2-propylheptanoate), tetraethylene glycol dicyclohexanoate, pentaethylene glycol dibutyrate, pentaethylene glycol dihexanoate, pentaethylene glycol bis (2-ethylhexanoate), pentaethylene glycol dioctoate, pentaethylene glycol bis(2-propylheptanoate), pentaethylene glycol dicyclohexanoate, and oligoethylene glycol bis(2-ethylhexanoate), and has a hydroxyl value of 10 mg KOH/g or less. In the description of the preferable embodiment, a limitation (modifier) on the aforementioned hydroxyl value modifies all of the aforementioned diester compounds.

In a more preferable embodiment, the diester compound of component (B) is triethylene glycol bis(2-ethylhexanoate) having a hydroxyl value of 5 mg KOH/g or less.

### <component (C)>

In the present invention, a curing catalyst is used as component (C). Component (C) acts as a silanol condensation catalyst for component (A). Examples of the curing catalyst of component (C) in the present invention include, but are not limited to, the following:
titanium compounds such as tetrabutyl titanate, tetrapropyl titanate, titanium tetrakis(acetylacetonate), bis(acetylacetonate)diisopropoxy titanium, diisopropoxy titanium bis(ethylacetoacetate) and the like;
dibutyltin-based compounds such as dimethyltin diacetate, dimethyltin bis(acetylacetonate), dibutyltin dilaurate, dibutyltin maleate, dibutyltin phthalate, dibutyltin dioctanoate, dibutyltin bis(2-ethylhexanoate), dibutyltin bis(methylmaleate), dibutyltin bis(ethylmaleate), dibutyltin bis(butylmaleate), dibutyltin bis(octylmaleate), dibutyltin bis(tridecylmaleate), dibutyltin bis(benzylmaleate), dibutyltin diacetate, dibutyltin dimethoxide, dibutyltin bis(nonylphenoxide), dibutenyltin oxide, dibutyltin oxide, dibutyltin bis(acetylacetonate), dibutyltin bis(ethylacetoacetonate), a reaction product of dibutyltin oxide and silicate compound, a reaction product of dibutyltin oxide and phthalate and the like;
dioctyltin-based compounds such as dioctyltin bis(ethylmaleate), dioctyltin bis(octylmaleate), dioctyltin dilaurate, dioctyltin diacetate, dioctyltin bis(acetylacetonate), dioctyltin diversatate, a reaction product of dioctyltin oxide and silicate compound and the like;
aluminum compounds such as aluminum tris(acetylacetonate), aluminum tris(ethylacetoacetate), diisopropoxy aluminum ethylacetoacetate and the like;
zirconium compounds such as zirconium tetrakis(acetylacetonate) and the like;
carboxylic acid and/or metal carboxylate;
amidine compounds such as 1-(o-tolyl)biguanide, 1-phenylguanidine, 1,2-dimethyl-1,4,5,6-tetrahydropyrimidine, 1,5,7-triazabicyclo[4.4.0]deca-5-en, 7-methyl-1,5,7-triazabicyclo[4.4.0]deca-5-en, amidine compound described in WO 2008/078654 and the like.

As the curing catalyst of component (C), organotin compounds such as dibutyltin-based compound, dioctyltin-based compound and the like are preferable. Dibutyltin-based compounds are superior in the balance of curability, adhesiveness and the like, and widely used. In recent years, however, dibutyltin-based compounds are feared to show an adverse influence on the human body and, in such case, a dioctyltin-based compound can be used. As the dioctyltin-based compound, dioctyltin bis(acetylacetonate), dioctyltin dilaurate, dioctyltin diversatate, and a reaction product of dioctyltin and a silicate compound are industrially available and preferable.

From the aspects of depth curability of a curable composition, improvement of adhesiveness of a cured product to a substrate and the like, an amidine compound is preferable, and 1-phenylguanidine is more preferable as the curing catalyst of component (C).

The amount of the curing catalyst of component (C) is preferably 0.01 - 20 parts by weight, more preferably 0.1 - 10 parts by weight, per 100 parts by weight of the organic polymer of component (A). When the amount of the curing catalyst is 0.01 - 20 parts by weight, the curable composition shows superior curability and adequate curing time, and is superior in workability.

### <other components>

As long as the effect of the present invention is not inhibited, the curable composition of the present invention may contain components other than the aforementioned components (A) - (C) (other components). Such other components are explained below.

The curable composition of the present invention can contain aminosilane. Aminosilane is a compound having a reactive silicone group and an amine group in a molecule, and is generally referred to as an adhesion-imparting agent. When the curable composition containing same is used for various adherends, for example, inorganic substrates such as glass, aluminum, stainless, zinc, copper, mortar and the like, organic substrates such as vinyl chloride, acrylic, polyester, polyethylene, polypropylene, polycarbonate and the like, aminosilane shows a remarkable adhesiveness-improving effect under nonprimer conditions or primer treatment conditions. When a curable composition containing aminosilane is used under nonprimer conditions, particularly, an adhesiveness-improving effect on various adherends is remarkable. In addition, aminosilane is a compound capable of functioning as a property-controlling agent, an inorganic filler dispersibility-improving agent and the like.

As a reactive silicone group of aminosilane, groups already exemplified above can be mentioned. As the hydrolyzable group aminosilane has, methoxy group, ethoxy group and the like are preferable from the aspect of the hydrolysis rate. The number of hydrolyzable groups is preferably two or more, particularly 3 or more.

Examples of the aminosilane include amino group-containing silanes such as γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-aminoethyl)aminopropyltriisopropoxysilane, γ-(2-(2-aminoethyl)aminoethyl)aminopropyltrimethoxysilane, γ-(6-aminohexyl)aminopropyltrimethoxysilane, 3-(N-ethylamino)-2-methylpropyltrimethcxysilane, γ-ureidopropyltrimethoxysilane, γ-ureidopropyltriethoxysilane, N-phenyl-γ-aminopropyltrimethoxysilane, N-benzyl-γ-aminopropyltrimethoxysilane, N-vinylbenzyl-γ-aminopropyltriethoxysilane, N-cyclohexylaminomethyltriethoxysilane, N-cyclohexylaminomethyldiethoxymethylsilane, N-phenylaminomethyltrimethoxysilane, (2-aminoethyl)aminomethyltrimethoxysilane, N,N'-bis[3-(trimethoxysilyl)propyl]ethylenediamine and the like; ketimine silanes such as N-(1,3-dimethylbutylidene)-3-(triethoxysilyl)-1-propaneamine and the like.

To secure good adhesiveness, γ-aminopropyltrimethoxysilane, γ-(2-aminoethyl)aminopropyltrimethoxysilane, and γ-(2-aminoethyl)aminopropylmethyldimethoxysilane are preferable. Only one kind of aminosilane may be used, or two or more kinds thereof may be used in combination. γ-(2-Aminoethyl)aminopropyltrimethoxysilane shows stimulation as compared to other aminosilanes. The stimulation can be mitigated by reducing the amount of γ-(2-aminoethyl)aminopropyltrimethoxysilane, and additionally using γ-aminopropyltrimethoxysilane and the like.

When aminosilane is used, the amount thereof is preferably 1 - 20 parts by weight, more preferably 2 - 10 parts by weight, per 100 parts by weight of the organic polymer of component (A). When this amount is less than 1 part by weight, the cured product may fail to show sufficient adhesiveness. On the other hand, when this amount exceeds 20 parts by weight, the cured product becomes brittle, cannot afford sufficient strength, and the curing rate of the curable composition may become slow.

An adhesion imparting agent other than aminosilane can be used for the curable composition of the present invention. Examples of the adhesion-imparting agent other than aminosilane include epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane, β-(3,4-epoxycyclohexyl)ethyltriethoxysilane, glycidoxyoctyltrimethoxysilane and the like; isocyanate group-containing silanes such as γ-isocyanatepropyltrimethoxysilane, γ-isocyanatepropyltriethoxysilane, γ-isocyanatepropylmethyldiethoxysilane, γ-isocyanatepropylmethyldimethoxysilane, (isocyanatemethyl)trimethoxysilane, (isocyanatemethyl)dimethoxymethylsilane and the like; mercapto group-containing silanes such as γ-mercaptopropyltrimethoxysilane, γ-mercaptopropyltriethoxysilane, γ-mercaptopropylmethyldimethoxysilane, γ-mercaptopropylmethyldiethoxysilane, mercaptomethyltriethoxysilane and the like; carboxysilanes such as β-carboxyethyltriethoxysilane, β-carboxyethylphenylbis(2-methoxyethoxy)silane, N-β-(carboxymethyl)aminoethyl-γ-aminopropyltrimethoxysilane and the like; vinyl unsaturated group-containing silanes such as vinyltrimethoxysilane, vinyltriethoxysilane, γ-methacryloyloxypropylmethyldimethoxysilane, γ-acryloyloxypropylmethyltriethoxysilane and the like; halogen-containing silanes such as γ-chloropropyltrimethoxysilane and the like; isocyanurate silanes such as tris(trimethoxysilyl)isocyanurate and the like, and the like. In addition, a condensation product obtained by partially condensing the above-mentioned silanes can also be used. Furthermore, amino-modified silyl polymer, silylated amino polymer, unsaturated aminosilane complex, phenylamino long-chain alkylsilane, aminosilylated silicone, silylated polyester and the like, which are derivatives obtained by modifying them can be used as adhesion-imparting agents other than aminosilane. When the aforementioned adhesion-imparting agent other than aminosilane is used, the amount thereof is generally preferably 0.1 - 20 parts by weight, more preferably 0.5 - 10 parts by weight, per 100 parts by weight of the organic polymer of component (A).

To secure good adhesiveness, γ-glycidoxypropyltrimethoxysilane, γ-glycidoxypropyltriethoxysilane, γ-glycidoxypropylmethyldimethoxysilane, and glycidoxyoctyltrimethoxysilane are preferable. Glycidoxyoctyltrimethoxysilane is more preferable since it has an effect to improve adhesiveness of the cured product under wet conditions.

Besides the above-mentioned adhesion-imparting agents, for example, epoxy resin, phenol resin, sulfur, alkyl titanates, aromatic polyisocyanate and the like can be used as adhesion-imparting agents. Only one kind of the above-mentioned adhesion-imparting agent may be used, or two or more kinds thereof may be used in combination. However, since the epoxy resin sometimes lowers the catalyst activity depending on the amount to be added, a small amount of an epoxy resin is preferably added to the curable composition of the present invention. The amount of the epoxy resin to be used is preferably not more than 5 parts by weight, more preferably not more than 0.5 parts by weight, per 100 parts by weight of the organic polymer of component (A), and the substantial absence of an epoxy resin in the curable composition is further preferable.

The depth curability which is one of the affects of the present invention can be improved more by further using an ethylene glycol structure-containing silane coupling agent. As an example of the ethylene glycol structure-containing silane coupling agent, trade name: X-12-641 manufactured by Shin-Etsu Chemical Co., Ltd. can be recited. When an ethylene glycol structure-containing silane coupling agent is used, the amount thereof is preferably 1 - 15 parts by weight, more preferably 3 - 10 parts by weight, per 100 parts by weight of the organic polymer of component (A).

The curable composition of the present invention can contain an antioxidant (anti-aging agent). When an antioxidant is used, heat resistance of the cured product can be increased. Examples of the antioxidant include hindered phenol-based antioxidant, monophenol-based antioxidant, bisphenol-based antioxidant, and polyphenol-based antioxidant, and hindered phenol-based antioxidant is particularly preferable. Specific examples of the antioxidant are described in JP-A-4-283259 and JP-A-9-194731. When an antioxidant is used, the amount thereof is preferably 0.1 - 10 parts by weight, more preferably 0.2 - 5 parts by weight, per 100 parts by weight of the organic polymer of component (A).

The curable composition of the present invention can contain a light stabilizer. When a light stabilizer is used, photooxidation degradation of the cured product can be prevented. Examples of the light stabilizer include benzotriazole-based light stabilizer, hindered amine-based light stabilizer, benzoate-based light stabilizer and the like, and hindered amine-based light stabilizer is particularly preferable. When a light stabilizer is used, the amount thereof is preferably 0.1 - 10 parts by weight, more preferably 0.2 - 5 parts by weight, per 100 parts by weight of the organic polymer of component (A). Specific examples of the light stabilizer are described in JP-A-9-194731.

When the curable composition of the present invention contains a photocurable substance (particularly, unsaturated acrylic compound), as described in JP-A-5-70531, a tertiary amine-containing hindered amine-based light stabilizer is preferably used as the hindered amine-based light stabilizer, since storage stability of the curable composition can be improved. Examples of the tertiary amine-containing hindered amine-based light stabilizer include Tinuvin 622 LD, Tinuvin 144, CHIMASSORB 119FL (all the above manufactured by BASF Japan Ltd.); MARK LA-57, LA-62, LA-67, LA-63 (all the above manufactured by ADEKA CORPORATION) ; Sanol LS-765, LS-292, LS-2626, LS-1114, LS-744 (all the above manufactured by BASF Japan Ltd.) and the like.

The curable composition of the present invention can contain an ultraviolet absorber. When an ultraviolet absorber is used, surface weatherability of the cured product can be enhanced. Examples of the ultraviolet absorber include benzophenone-based ultraviolet absorber, benzotriazole-based ultraviolet absorber, salycilate-based ultraviolet absorber, substituted tolyl ultraviolet absorber and metal chelate-based ultraviolet absorber and the like, and benzotriazole-based ultraviolet absorber is particularly preferable. When an ultraviolet absorber is used, the amount thereof is preferably 0.1 - 10 parts by weight, more preferably 0.2 - 5 parts by weight, per 100 parts by weight of the organic polymer of component (A). A combined use of phenol-based antioxidant and/or hindered phenol-based antioxidant, and hindered amine-based light stabilizer, and benzotriazole-based ultraviolet absorber is preferable.

The curable composition of the present invention can contain one or more kinds of fillers. Examples of the filler include reinforcing fillers such as fumed silica, precipitated silica, crystal silica, molten silica, dolomite, silicic anhydride, hydrous silicate, carbon black and the like; fiber fillers such as glass fiber and filament and the like; ground calcium carbonate, colloidal calcium carbonate (e.g., colloidal calcium carbonate surface-treated with fatty acid), magnesium carbonate, diatomite, calcined clay, clay, talc, titanium oxide (e.g., rutile titanium oxide), bentonite, organic bentonite, ferric oxide, aluminum fine powder, flint powder, zinc oxide, activated zinc oxide, shirasu balloon, glass micro balloon, organic micro balloon made from phenol resin or vinylidene chloride resin, resin powder such as PVC powder, PMMA powder and the like, and the like. When a filler is used, the amount thereof is preferably 1 - 250 parts by weight, more preferably 10 - 200 parts by weight, per 100 parts by weight of the organic polymer of component (A).

When a cured product having a high strength is desired, a filler mainly selected from fumed silica, precipitated silica, crystal silica, molten silica, dolomite, silicic anhydride, hydrous silicate, carbon black, surface-treated fine calcium carbonate, calcined clay, clay, activated zinc oxide and the like is preferably used. When the aforementioned filler is used, the amount thereof is preferably 1 - 200 parts by weight per 100 parts by weight of the organic polymer of component (A).

When a cured product having a low strength and high breaking elongation is desired, a filler mainly selected from titanium oxide, calcium carbonate such as ground calcium carbonate, and the like, magnesium carbonate, talc, ferric oxide, zinc oxide, shirasu balloon and the like is preferably used. When the aforementioned filler is used, the amount thereof is preferably 5 - 200 parts by weight, per 100 parts by weight of the organic polymer of component (A).

Generally, when the specific surface area of calcium carbonate is higher, the improvement effect on the breaking strength, breaking elongation, adhesiveness of the cured product becomes higher. When calcium carbonate is used, surface-treated fine calcium carbonate and calcium carbonate having a large particle size such as ground calcium carbonate and the like are preferably used in combination. The particle size of the surface-treated fine calcium carbonate is preferably not more than 0.5 µm, and the surface treatment thereof is preferably a fatty acid treatment or a fatty acid salt treatment. The particle size of the calcium carbonate having a large particle size is preferably 1 µm or more. As calcium carbonate having a large particle size, one free of a surface treatment can be used.

In addition, the thermally expandable hollow granules described in JP-A-2004-51701, JP-A-2004-66749 and the like can be used. Thermally expandable hollow granule is a plastic sphere obtained by covering a low boiling point compound such as hydrocarbon having 1 - 5 carbon atoms and the like with an outer shell polymer material (vinylidene chloride copolymer, acrylonitrile-based copolymer, or vinylidene chloride-acrylonitrile copolymer) into a sphere. When an adhesion part formed using a curable composition containing thermally expandable hollow granules is heated, the gas pressure in the shell of the thermally expandable hollow granules increases, and the outer shell polymer material is softened to dramatically increase the volume, whereby the adhesive interface can be detached.

The curable composition of the present invention is preferably used as an adhesive for joint of exterior walls of housing such as sizing board, particularly ceramic sizing board, and the like or for exterior wall tiles, an adhesive for exterior wall tiles, which remains in the joint, and the like, since chemical resistance of a cured product is good and the like. When the curable composition of the present invention is used in a sealing material, it is desirable to match the design of an exterior wall and the design of the sealing material. Particularly, when the curable composition of the present invention is used in a sealing material used for exterior walls with high grade by sputter coating, mixing with colored aggregate and the like, a scale-like or granular substance having a diameter of not less than 0.1 mm, preferably about 0.1 - 5.0 mm, is preferably contained in the curable composition of the present invention. A cured product containing a scale-like or granular substance matches with high grade exterior walls. When a granular substance is used, the obtained cured product has a sand-like or sandstone-like rough surface, and when a scale-like substance is used, the cured product has a concavo-convex surface caused by the scale-like substance.

Preferable diameter, amount, material and the like of the scale-like or granular substance are as follows as described in JP-A-9-53063. The diameter thereof is preferably 0.1 mm or more, more preferably 0.1 - 5.0 mm, and a scale-like or granular substance having a suitable size is used according to the material, pattern and the like of the exterior wall. A scale-like or granular substance having a diameter of 0.2 - 5.0 mm or 0.5 - 5.0 mm can also be used. When a scale-like substance is used, the thickness thereof is 1/10 - 1/5 (0.01 - 1.00 mm) of the diameter.

The scale-like or granular substance is added at 1 - 200 parts by weight per 100 parts by weight of the curable composition. The amount is appropriately determined according to the size of individual scale-like or granular substances, and material, pattern and the like of the exterior wall. As a scale-like or granular substance, naturally occurring substances such as silica sand, mica and the like, synthetic rubber, synthetic resin, alumina and the like are used. To enhance the design aspect when filled in a joint, a scale-like or granular substance painted in a suitable color according to the material, pattern and the like of the exterior wall may also be used.

When a balloon (preferably having an average particle size of not less than 0.1 mm) is used in the curable composition of the present invention, the obtained cured product has a sand-like or sandstone-like rough surface, and reduces the weight of the cured product. Preferable diameter, amount, material and the like of the balloon are as follows as described in JP-A-10-251618.

A balloon is a sphere having a hollow inside. Examples of the balloon include, but are not limited to, an inorganic balloon comprising a material of glass, shirasu, silica and the like, and an organic balloon comprising a material of phenol resin, urea resin, polystyrene, saran and the like. In addition, a composite balloon constituted of an inorganic material and an organic material, or a balloon having plural layers can also be used. Furthermore, a balloon having a processed or coated surface can also be used. In addition, a balloon having a surface treated with various kinds of surface treating agents can also be used. Examples of the surface-treated balloon include an organic balloon coated with calcium carbonate, talc, titanium oxide and the like, an inorganic balloon surface-treated with an adhesion-imparting agent and the like.

To afford a cured product having a sand-like or sandstone-like rough surface, the balloon preferably has a particle size of not less than 0.1 mm. A balloon having a particle size of 0.2 mm - 5.0 mm or 0.5 mm - 5.0 mm can also be used. When the size is less than 0.1 mm, the viscosity of the cured product is merely increased and a cured product having a rough surface sometimes cannot be achieved. The amount of the balloon can be appropriately determined according to the surface roughness of the cured product. Generally, a balloon having a particle size of 0.1 mm or more is preferably added in an amount of 5 - 25 vol% in the curable composition. When the amount of the balloon is less than 5 vol%, a cured product with a rough surface cannot be formed, and when the amount exceeds 25 vol%, the curable composition has high viscosity and degraded workability, and the cured product has high modulus and the basic property thereof tends to be impaired. The amount of the balloon curable in the composition is more preferably 8 - 22 vol%.

When a balloon is used, a slip preventive described in JP-A-2000-154368, and amine compound described in JP-A-2001-164237, which affords a matte surface of a cured product, particularly primary and/or secondary amine having a melting point of not less than 35°C, can be added.

Specific examples of the balloon are shown in JP-A-2-129262, JP-A-4-8788, JP-A-4-173867, JP-A-5-1225, JP-A-7-113073, JP-A-9-53063, JP-A-10-251618, JP-A-2000-154368, JP-A-2001-164237, WO97/05201 and the like.

Even when the curable composition of the present invention contains cured product particles for a sealing material, the cured product forms concaves and convexes on the surface thereof and improve the design. The preferable diameter, amount to be added, material and the like of the cured product particles for a sealing material are as follows as described in JP-A-2001-115142. The diameter thereof is preferably 0.1 mm - 1 mm, more preferably about 0.2 - 0.5 mm. The amount thereof in the curable composition is preferably 5 - 100 wt%, more preferably 20 - 50 wt%. While the material thereof is not limited as long as it can be used as cured product particles for a sealing material, examples thereof include urethane resin, silicone, modified silicone, polysulfide rubber and the like, and modified silicone is preferable.

In addition, the curable composition of the present invention can contain silicate. The silicate acts as a crosslinking agent and has a function to improve recovery property, durability, and creep resistance of a cured product. Furthermore, silicate also has an effect to improve the adhesiveness and water-resistant adhesiveness, as well as adhesion durability under high temperature and high humidity conditions. As silicate, tetraalkoxysilane or a partially hydrolyzed condensate thereof can be used. When silicate is used, the amount thereof is 0.1 - 20 parts by weight, preferably 0.5 - 10 parts by weight, per 100 parts by weight of the organic polymer of component (A).

Examples of the silicate include tetraalkoxysilanes (tetraalkylsilicates) such as tetramethoxysilane, tetraethoxysilane, ethoxytrimethoxysilane, dimethoxydiethoxysilane, methoxytriethoxysilane, tetra-n-propoxysilane, tetra-i-propoxysilane, tetra-n-butoxysilane, tetra-i-butoxysilane, tetra-t-butoxysilane and the like, and a partially hydrolyzed condensate thereof.

The partially hydrolyzed condensate of tetraalkoxysilane is preferable since it shows a greater improvement effect on the recovery property, curability and creep resistance of a cured product than with tetraalkoxysilane. As the aforementioned partially hydrolyzed condensate of tetraalkoxysilane, for example, one obtained by adding water to tetraalkoxysilane to allow partial hydrolysis and then condensation thereof by a conventional method can be mentioned. In addition, as the partially hydrolyzed condensate of organosilicate compound, a commercially available product can be used. As such condensates, for example, methyl silicate 51, ethyl silicate 40 (both manufactured by COLCOAT CO., LTD.) and the like can be mentioned.

A tackifier resin can be added to the curable composition of the present invention. While the tackifier resin is not particularly limited, one generally used irrespective of being solid or liquid at ambient temperature can be used. Examples of the tackifier resin include styrene copolymer and a hydrogenated product thereof (particularly, styrene-based block copolymer and a hydrogenated product thereof), phenol resin, modified phenol resin (e.g., cashew oil-modified phenol resin, tall oil-modified phenol resin etc.), terpene phenol resin, xylene phenol resin, cyclopentadiene-phenol resin, coumarone indene resin, rosin resin, rosin ester resin, hydrogenated rosin ester resin, xylene resin, low molecular weight polystyrene-based resin, petroleum resin (e.g., C5 hydrocarbon resin, C9 hydrocarbon resin, C5C9 hydrocarbon copolymerized resin etc.), hydrogenated petroleum resin, terpene-based resin, DCPD resin petroleum resin and the like. Examples of the styrene-based block copolymer and the hydrogenated product thereof include styrene-butadiene-styrene block copolymer (SBS), styrene-isoprene-styrene block copolymer (SIS), styrene-ethylenebutylene-styrene block copolymer (SEBS), styrene-ethylenepropylene-styrene block copolymer (SEPS), styrene-isobutylene-styrene block copolymer (SIBS) and the like. The above-mentioned tackifier resin may be used alone, or two or more kinds thereof may be used in combination. When a tackifier resin is used, the amount thereof is preferably 5 - 1,000 parts by weight, more preferably 10 - 100 parts by weight, per 100 parts by weight of the organic polymer of component (A).

A property-controlling agent may be added to the curable composition of the present invention as necessary to adjust the tensile property of the resulting cured product. Examples of the property-controlling agent include, but are not particularly limited to, alkylalkoxysilanes such as methyltrimethoxysilane, dimethyldimethoxysilane, trimethylmethoxysilane, n-propyltrimethoxysilane and the like; alkoxysilanes having a functional group such as alkylisopropenoxysilanes such as dimethyldiisopropenoxysilane, methyltriisopropenoxysilane, γ-glycidoxypropylmethyldiisopropenoxysilane and the like, γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)aminopropylmethyldimethoxysilane, γ-mercaptopropyltrimethoxysilane, γ-mercaptopropylmethyldimethoxysilane and the like; silicone varnishs; polysiloxanes and the like. Using the aforementioned property-controlling agent, the hardness of the cured product obtained from the curable composition of the present invention can be adjusted to above or below, and the breaking elongation of the cured product can be improved. The above-mentioned property-controlling agent may be used alone, or two or more kinds thereof may be used in combination.

Particularly, a compound that produces a compound having a monovalent silanol group by hydrolysis has an action to decrease the modulus of a cured product without worsening the stickiness of the surface of the cured product. Particularly, a compound that produces trimethylsilanol is preferable. As the compound that produces a compound having a monovalent silanol group by hydrolysis, the compound described in JP-A-5-117521 can be mentioned. In addition, for example, a derivative of alkylalcohol such as hexanol, octanol, decanol and the like, which produces R₃SiOH (e.g., trimethylsilanol etc.) by hydrolysis; a derivative of polyvalent alcohol having 3 or more hydroxy groups such as trimethylolpropane, glycerol, pentaerythritol, sorbitol and the like, which produces R₃SiOH (e.g., trimethylsilanol etc.) by hydrolysis and is described in JP-A-11-241029; can be mentioned.

In addition, a derivative of an oxypropylene polymer, which produces R₃SiOH (e.g., trimethylsilanol etc.) by hydrolysis and is described in JP-A-7-258534 can also be mentioned. Furthermore, a polymer having a crosslinkable reactive silicon-containing group and a silicon-containing group that produces monosilanol by hydrolysis and is described in JP-A-6-279693 can also be used.

When a property-controlling agent is used, the amount thereof to be used is preferably 0.1 - 20 parts by weight, more preferably 0.5 - 10 parts by weight, per 100 parts by weight of the organic polymer of component (A).

A thixotropy-imparting agent (anti-sagging agent) may be added to the curable composition of the present invention as necessary to prevent sagging and improve workability. Examples of the thixotropy-imparting agent include, but are not particularly limited, polyamide waxs; hydrogenated castor oil derivatives; metal soaps such as calcium stearate, aluminum stearate, barium stearate and the like, and the like. When a rubber powder having a particle size of 10 - 500 µm described in JP-A-11-349916 or an organic fiber described in JP-A-2003-155389 is used as a thixotropy-imparting agent, a curable composition showing high thixotropy and good workability can be obtained. Such thixotropy-imparting agents may be used alone or two or more kinds thereof may be used in combination. When a thixotropy-imparting agent is used, the amount thereof is preferably 0.1 - 20 parts by weight, per 100 parts by weight of the organic polymer of component (A).

In the curable composition of the present invention, a compound having an epoxy group and free of a silicon atom can be used. By the use of the compound, the recovery property of the cured product can be increased. As the compound, epoxydized unsaturated fats and oils, epoxydized unsaturated fatty acid esters, alicyclic epoxy compounds, epichlorohydrin derivative and mixtures thereof and the like can be mentioned as examples. Specifically, epoxydized soy bean oil, epoxydized linseed oil, bis(2-ethylhexyl)-4,5-epoxycyclohexane-1,2-dicarboxylate (E-PS), epoxyoctyl stearate, epoxybutyl stearate and the like can be mentioned. Of these, E-PS is particularly preferable. When the compound is used, the amount thereof is preferably 0.5 - 50 parts by weight per 100 parts by weight of the organic polymer of component (A).

A photocurable substance can be used in the cured composition of the present invention. When a photocurable substance is used, a film of the photocurable substance is formed on the surface of the cured product, the stickiness and weather resistance can be improved. The photocurable substance produces curing (crosslinking) by the action of light. As the photocurable substance, organic monomer, oligomer resin, a composition containing same and the like are known. As a photocurable substance, a commercially available product can be used. As a photocurable substance, an unsaturated acrylic compound, polyvinyl cinnamate, for example, an azidated resin and the like can be mentioned.

Examples of the unsaturated (meth)acrylic compound include monomers, oligomers and a mixture thereof, having plural (meth)acryloyl groups which are monomers such as ethylene glycol di(meth)acrylate, propylene glycol di(meth)acrylate, butylene glycol di(meth)acrylate, neopentyl glycol di(meth)acrylate and the like, oligoesters or polyesters having a molecular weight of 10,000 or below constituted of the aforementioned monomers. Specifically, acrylate (bifunctional) Aronix M-210, Aronix M-215, Aronix M-220, Aronix M-233, Aronix M-240, Aronix M-245; (trifunctional) Aronix M-305, Aronix M-309, Aronix M-310, Aronix M-315, Aronix M-320, Aronix M-325, and (multifunctional) Aronix M-400 (each of Aronix above is a product of Toagosei Co., Ltd.) and the like can be mentioned as examples. Particularly, a compound containing an acryloyl group is preferable, and a compound containing not less than 3 acryloyl groups on average in one molecule is more preferable.

Examples of the polyvinyl cinnamate include polyvinyl cinnamate derivative, and a photosensitive resin having a cinnamoyl group obtained by esterification of polyvinyl alcohol with cinnamic acid. The azidated resin is a photosensitive resin having an azido group. "Photosensitive Resin" (Insatsu Gakkai Shuppanbu Ltd., page 93-, page 106-, page 117-, March 17, 1972) discloses detailed examples of azidated resin.

The photocurable substance may be used singly, or used in combination with a sensitizer and/or a promoter as necessary. Examples of the sensitizer include ketones, nitro compound and the like and examples of the promoter include amines and the like.

When a photocurable substance is used, the amount thereof is preferably 0.1 - 20 parts by weight, more preferably 0.5 - 10 parts by weight, per 100 parts by weight of the organic polymer of component (A). When the amount is less than 0.1 part by weight, the weather resistance is not enhanced, and when the amount is more than 20 parts by weight, the cured product becomes too hard and tends to crack.

The composition of the present invention can contain an oxygen curable substance. As the oxygen curable substance, an unsaturated compound reactive with oxygen in the air can be mentioned as an example. The oxygen curable substance reacts with oxygen in the air to form a cured film near the surface of the cured product, thereby preventing stickiness of the surface and attachment of dirt and dust on the surface of the cured product and the like. Examples of the oxygen curable substance include dry oil such as tung oil, linseed oil and the like, alkyd resins obtained by modifying dry oil; acrylate-based polymer modified by dry oil; epoxy resin; silicone resin; liquid polymers such as 1,2-polybutadiene, 1,4-polybutadiene, C5 - C8 diene polymer and the like obtained by polymerization or copolymerization of diene compounds such as butadiene, chloroprene, isoprene, 1,3-pentadiene and the like; liquid copolymers such as NBR, SBR and the like obtained by copolymerization of diene compounds and copolymerizable monomers (ex. acrylonitrile, styrene and the like), such that the diene compound becomes the main component, modified products of the above-mentioned enzyme curable substance (maleic modified products, boil oil modified products and the like) and the like. They may be used singly, or two or more kinds thereof may be used in combination. Of these, tung oil and liquid diene polymer are preferable. In addition, a combined use of a catalyst promoting the oxidation curing reaction or a metal dryer may enhance the effect. As such catalyst and metal dryer, metal salts such as cobalt naphthenate, lead naphthenate, zirconium naphthenate, cobalt octylate, zirconium octylate and the like, amine compounds and the like can be mentioned as examples. When an oxygen curable substance is used, the amount thereof is preferably 0.1 - 20 parts by weight, more preferably 0.5 - 10 parts by weight, per 100 parts by weight of the organic polymer of content (A). When the aforementioned amount is less than 0.1 part by weight, improvement of staining property becomes insufficient, and when it exceeds 20 parts by weight, the tensile property and the like of the cured product tend to be impaired. As described in JP-A-3-160053, the oxygen curable substance is preferably used in combination with a photocurable substance.

The curable composition of the present invention can contain a flame-retardant such as a phosphorus plasticizer such as ammonium polyphosphate, tricresyl phosphate and the like, aluminum hydroxide, magnesium hydroxide, thermally expandable black lead and the like. The flame-retardant may be used singly, or two or more kinds thereof may be used in combination. When a flame-retardant is used, the amount thereof is preferably 5 - 200 parts by weight, more preferably 10 - 100 parts by weight, per 100 parts by weight of the organic polymer of content (A).

In the curable composition of the present invention, a solvent can be used to reduce the viscosity thereof, increase thixotropy, and improve workability. The solvent is not particularly limited, and examples thereof include hydrocarbon solvents such as toluene, xylene, heptane, hexane, petroleum solvent and the like, halogenated solvent such as trichloroethylene and the like, ester solvents such as ethyl acetate, butyl acetate and the like, ketone solvents such as acetone, methyl ethyl ketone, methyl isobutyl ketone and the like, alcohol solvents such as methanol, ethanol, isopropyl alcohol and the like, silicone solvent such as hexamethylcyclotrisiloxane, octamethylcyclotetrasiloxane, decamethylcyclopentasiloxane and the like. These solvent may be used alone or two or more kinds thereof may be used in combination.

To reduce air contamination and the like, the boiling point of the solvent is preferably not less than 150°C, more preferably not less than 200°C, further preferably not less than 250°C. When the amount of the solvent in the curable composition is high, the obtained cured product may show volumetric shrinkage and the like. Therefore, the amount of the solvent is preferably not more than 3 parts by weight, more preferably not more than 1 part by weight, per 100 parts by weight of the organic polymer of component (A), and the substantial absence of a solvent is most preferable.

Additives other than those mentioned above may be added to the curable composition of the present invention as necessary to adjust various properties of a curable composition or a cured product. Examples of such additive include curability adjusting agent, radical inhibitor, metal deactivator, antiozonant, phosphorus peroxide decomposer, lubricant, pigment, foaming agent, repellent for ants, fungicide and the like. Only one kind of these various additives may be used, or two or more kinds thereof may be used in combination. Specific examples of the additive are recited in JP-B-4-69659, JP-B-7-108928, JP-A-63-254149, JP-A-64-22904, JP-A-2001-72854 and the like.

A dehydrating agent may be added to the curable composition of the present invention. Examples of the dehydrating agent include synthetic zeolite, activated alumina, silica gel, calcium oxide, magnesium oxide, alkoxysilane compound (e.g., n-propyltrimethoxysilane, vinyltrimethoxysilane, vinylmethyldimethoxysilane, methylsilicate, ethylsilicate, γ-mercaptopropylmethyldimethoxysilane, γ-mercaptopropylmethyldiethoxysilane, γ-glycidoxypropyltrimethoxysilane etc.), oxazolidine compound (e.g., -ethyl-2-methyl-2-(3-methylbutyl)-1,3-oxazolidine etc.), isocyanate compound and the like. When a dehydrating agent is used, the amount thereof is preferably 0.1 - 20 parts by weight, more preferably 0.5 - 10 parts by weight, per 100 parts by weight of the organic polymer of component (A).

### <preparation of curable composition>

The curable composition of the present invention may be a one-component composition prepared by adding all components, which cures due to the humidity in the air. In addition, the curable composition of the present invention may be a two-component composition wherein the first composition is prepared by blending component (C) (curing catalyst) and other components (e.g., filler, plasticizer, water etc.), the second composition is separately prepared by blending component (A), component (B) and other components as necessary, and the first composition and the second composition are mixed before use. Also, the curable composition of the present invention may be a multi-component composition wherein three or more compositions are separately prepared, and they are mixed before use. From the aspect of workability, a one-component composition is preferable.

When the curable composition of the present invention is prepared as a one-component composition, a component containing moisture is preferably used after dehydration drying in advance or dehydrated during kneading by depressurization and the like. When a solid such as powder and the like is dehydrated or dried, a heat-drying method or a reduced pressure dehydrating method is preferable. When a liquid is dehydrated or dried, a reduced pressure dehydrating method or a method using a dehydrating agent is preferable.

The production method of the curable composition of the present invention is not particularly limited, and a general method including blending the above-mentioned components, kneading the mixture in a mixer, roll, kneader and the like at ambient temperature or under heating, or dissolving the components in a small amount of a solvent and mixing same can be employed.

### <cured product>

When the curable composition of the present invention is exposed to the air, it three-dimensionaly forms a network tissue and is cured into a cured product having rubbery elasticity due to the action of moisture.

### <use>

The curable composition of the present invention can be used as a pressure-sensitive adhesive, a sealing material for structures, boats and ships, automobiles, roads and the like, adhesive, pattern-making agent, vibration-proof material, damping material, acoustic insulation, foamed material, paint, spraying material and the like. A cured product obtained by curing the curable composition of the present invention is superior in flexibility and adhesiveness. Therefore, the curable composition of the present invention is more preferably used as a sealing material or an adhesive.

In addition, the curable composition of the present invention can be used for various uses including electric or electronic component materials such as solar battery rear surface sealant and the like, electrical insulating materials such as insulation covering material for electric wire or cable and the like, elastic adhesive, contact-type adhesive, spray-type sealing material, crack repairing material, tiling adhesive, powder coating, casting material, medical rubber material, medical adhesive, medical equipment sealing material, food packaging material, joint sealing material, for jacket material such as sizing board and the like, coating material, primer, conductive material for shielding electromagnetic wave, thermally conductive material, hot melt material, electric/electronic potting agent, film, gasket, various molding material, as well as rustproof or waterproof sealing material for wire glass or laminate glass end surface (cut section), liquid sealant used for automobile parts, electric parts, various machine components and the like, and the like. Moreover, since the curable composition of the present invention alone or with the aid of a primer can be closely adhered to a wide range of substrates such as glass, porcelain, wood, metal, resin molded products and the like, it can also be used as various types of tight-sealing composition or adhesive composition. Furthermore, the curable composition of the present invention can be used as adhesive for interior panels, adhesive for exterior panels, tiling adhesive, stone finishing adhesive, ceiling finishing adhesive, floor finishing adhesive, wall finishing adhesive, vehicle paneling adhesive, adhesive for assembly of electric or electronic or precision equipments, sealing material for direct glazing, multi-layer glass sealing material, sealing material for SSG method, sealing material for structure working joints or water-proof material combinedly using asphalt.

As compared to conventional plasticizers, a diester compound as component (B) which is obtained from polyethylene glycol and aliphatic monocarboxylic acid and/or alicyclic monocarboxylic acid promotes moisture supply to the inside of a curable composition, and therefore, can enhance the depth curability of a curable composition. Hence, the curable composition of the present invention is particularly useful as a one-component composition which is cured by the humidity in the air. When a filler and the like are used in a two-component or multi-component composition using water as a component, moisture may not be sufficiently supplied to the inside of the composition obtained by mixing all components before use. However, since the curable composition of the present invention using the aforementioned component (B) promotes uptake of humidity in the air, it is also useful as a two-component or multi-component composition (particularly, two-component or multi-component composition using a filler and the like and resistant to easy supply of moisture into the inside). In addition, since the curable composition of the present invention shows small discoloration, it can be preferably used as a transparent composition free of a white filler such as calcium carbonate.

### [Examples]

The present invention is specifically explained by referring to Examples and Comparative Examples, which are not to be construed as limitative.

### (Synthetic Example 1)

Polymerization of propyleneoxide was performed using a 1/1 (weight ratio) mixture of polyoxypropylene diol having a number average molecular weight of about 2,000 and polyoxypropylene triol having a number average molecular weight of about 3,000 as an initiator and a zinc hexacyanocobaltate glyme complex catalyst, to give polypropyleneoxide containing terminal hydroxy group having a number average molecular weight of about 19,000 (GPC measurement value, solution delivery system: HLC-8120GPC manufactured by Tosoh Corporation, column: TSK-GEL H type manufactured by Tosoh Corporation, solvent: THF, based on polystyrene). Then, a solution of NaOMe (1.2 molar equivalents relative to the hydroxy group of the terminal hydroxy group-containing polypropyleneoxide) in methanol was added, methanol was evaporated, and allyl chloride (1.7 molar equivalents relative to the hydroxy group) was further added to convert the terminal hydroxy group to an allyl group to give allyl-terminal polypropyleneoxide.

n-Hexane (300 parts by weight) and water (300 parts by weight) were added to the obtained unpurified allyl-terminal polypropyleneoxide (100 parts by weight), and the obtained mixture was stirred, water was removed by centrifugation to give a hexane solution. To the obtained hexane solution was further added water (300 parts by weight) and the obtained mixture was stirred. Water was removed by centrifugation again, and hexane was removed by evaporation under reduced pressure. From the above, allyl group-terminal polypropyleneoxide having a number average molecular weight of about 19,000 was obtained.

The allyl group-terminal polypropyleneoxide (100 parts by weight) after the above-mentioned purification was reacted with methyldimethoxysilane (1.35 parts by weight) at 90°C for 2 hr, using an isopropanol solution (36 weight ppm) of platinum vinylsiloxane complex with platinum content 3 wt% as a catalyst to give polyoxypropylene-based polymer (A-1) having a methyldimethoxysilyl group. As a result of the GPC measurement (solution delivery system: HLC-8120GPC manufactured by Tosoh Corporation, column: TSK-GEL H type manufactured by Tosoh Corporation, solvent: THF), the number average molecular weight (Mn) of polymer (A-1) was 19,000, and the molecular weight distribution (Mw/Mn) thereof was 1.31. As a result of the ¹H-NMR measurement (apparatus: JNM-LA400 manufactured by JEOL, solvent: CDCl₃), polymer (A-1) had 1.7 methyldimethoxysilyl groups on average in one molecule. As a result of the DSC measurement, polymer (A-1) had a glass transition temperature of -59°C.

### (Synthetic Example 2)

Polymerization of propyleneoxide was performed using polyoxypropylene diol having a number average molecular weight of about 2,000 as an initiator and a zinc hexacyanocobaltate glyme complex catalyst, to give polypropyleneoxide containing terminal hydroxy group having a number average molecular weight of about 28,500 (molecular weight based on polystyrene by a method similar to Synthetic Example 1). Then, a solution of NaOMe (1.2 molar equivalents relative to the hydroxy group of the terminal hydroxy group-containing polypropyleneoxide) in methanol was added, methanol was evaporated, and allyl chloride (1.7 molar equivalents relative to the hydroxy group to convert the terminal hydroxy group) was further added to an allyl group to give allyl-terminal polypropyleneoxide.

n-Hexane (300 parts by weight) and water (300 parts by weight) were added to the obtained unpurified allyl-terminal polypropyleneoxide (100 parts by weight), and the obtained mixture was stirred, water was removed by centrifugation to give a hexane solution. To the obtained hexane solution was further added water (300 parts by weight) and the obtained mixture was stirred. Water was removed by centrifugation again, and hexane was removed by evaporation under reduced pressure. From the above, allyl group-terminal polypropyleneoxide having a number average molecular weight of about 28,500 was obtained.

The allyl group-terminal polypropyleneoxide (100 parts by weight) after the above-mentioned purification was reacted with methyldimethoxysilane (0.96 part by weight) at 90°C for 2 hr, using an isopropanol solution (36 weight ppm) of platinum vinylsiloxane complex with platinum content 3 wt% as a catalyst to give polyoxypropylene-based polymer (A-2) having a methyldimethoxysilyl group. As a result of the GPC measurement (solution delivery system: HLC-8120GPC manufactured by Tosoh Corporation, column: TSK-GEL H type manufactured by Tosoh Corporation, solvent: THF), the number average molecular weight (Mn) of polymer (A-2) was 28,500, and the molecular weight distribution (Mw/Mn) thereof was 1.25. As a result of the ¹H-NMR measurement (apparatus: JNM-LA400 manufactured by JEOL, solvent: CDCl₃), polymer (A-2) had 1.6 methyldimethoxysilyl groups on average in one molecule. As a result of the DSC measurement, polymer (A-2) had a glass transition temperature of -59°C.

### (Synthetic Example 3)

Copper(I) bromide (28.4 g) and acetonitrile (390 mL) were charged in a 10 L flask, and the mixture was stirred with heating under a nitrogen stream at 70°C for 20 min. Thereto were added diethyl 2,5-dibromoadipate (59.3 g), n-butyl acrylate (2540 mL), ethyl acrylate (610 mL), and stearyl acrylate (710 mL), and the mixture was further stirred with heating at 80°C for 20 min. Thereto was added pentamethyldiethylenetriamine (hereinafter to be referred to as triamine) (4.1 mL) to start the reaction. Furthermore, amine (1.4 mL) was added. The mixture was continuously stirred with heating at 80°C, during which triamine (1.4 mL) was added. At 180 min from the start of the reaction, the inside of the reaction container was depressurized, and volatile components were removed. At 240 min from the start of the reaction, acetonitrile (1180 mL), 1,7-octadiene (490 mL) and triamine (13.8 mL) were added, and the mixture was continuously stirred with heating at 80°C, and at 620 min from the start of the reaction, heating was stopped. The reaction solution was heated under reduced pressure to remove volatile components, and the mixture was diluted with toluene and filtered. The filtrate was concentrated to give a polymer. The obtained polymer, hydrotalcite (trade name: KYOWAAD 500SH manufactured by Kyowa Chemical Industry Co., Ltd., 2 parts by weight per 100 parts by weight of the polymer) and aluminum silicate (trade name: KYOWAAD 700SL manufactured by Kyowa Chemical Industry Co., Ltd., 2 parts by weight per 100 parts by weight of the polymer) were mixed with xylene (100 parts by weight per 100 parts by weight of the polymer), and the mixture was stirred at 130°C. After 3 hr, the mixture was filtered to remove hydrotalcite and aluminum silicate. The filtrate was heated under reduced pressure to evaporate volatile components to give a polymer. The obtained polymer was subjected to heating evaporation (degree of vacuum 10 torr or less) at 180°C for 12 hr to eliminate Br group from the polymer.

The obtained polymer, hydrotalcite (trade name: KYOWAAD 500SH manufactured by Kyowa Chemical Industry Co., Ltd., 3 parts by weight per 100 parts by weight of the polymer) and aluminum silicate (trade name: KYOWAAD 700SL manufactured by Kyowa Chemical Industry Co., Ltd., 3 parts by weight per 100 parts by weight of the polymer) were mixed with xylene (100 parts by weight per 100 parts by weight of the polymer) and the mixture was stirred at 130°C. After 5 hr, the mixture was filtered to remove hydrotalcite and aluminum silicate and the filtrate was heated under reduced pressure to evaporate volatile components to give an alkenyl-terminal polymer. Then, the above-mentioned polymer (233 g), methyldimethoxysilane (25.5 mL), dimethyl orthoformate (3.8 mL), and platinum catalyst were charged in a 2000 mL pressure glass reaction container. The amount of the platinum catalyst to be used was 2×10⁻⁴ molar equivalents relative to the alkenyl group of the polymer. The reaction mixture was heated at 100°C for 3 hr. The volatile components in the mixture was evaporated under reduced pressure to give a acrylate-based polymer (A-3) having a methyldimcthoxysilyl group on the terminal. As a result of the GPC measurement (solution delivery system: HLC-8120GPC manufactured by Tosoh Corporation, column: TSK-GEL H type manufactured by Tosoh Corporation, solvent: THF, based on polystyrene), the number average molecular weight (Mn) of polymer (A-3) was 27,000, and the molecular weight distribution (Mw/Mn) thereof was 1.31. As a result of the ¹H-NMR measurement (apparatus: JNM-LA400 manufactured by JEOL, solvent: CDCl₃), polymer (A-3) had 1.7 methyldimethoxysilyl groups on average in one molecule. As a result of the DSC measurement, polymer (A-3) had a glass transition temperature of -33°C.

### (synthetic Example 4)

To ACCLAIM POLYOL 12200 of Sumika Bayer Urethane Co., Ltd. (polypropylene glycol having a number average molecular weight of about 11,000) (100 parts by weight) was added 3-isocyanatepropyltrimethoxysilane (trade name: Y-5187 manufactured by Momentive Performance Materials) (3.3 parts by weight), and the mixture was reacted at 90°C for 2 hr in the presence of a mercapto tin-based catalyst, NEOSTAN U-360 (manufactured by Nitto Kasei Co., Ltd.) (30 weight ppm). The disappearance of the peak (2272cm⁻¹) of isocyanate group was confirmed by IR and the reaction was terminated to give a polyoxypropylene-based polymer (A-4) having a urethane bond in the main chain and a trimethoxysilyl group on the terminal. As a result of the GPC measurement (solution delivery system: HLC-8120GPC manufactured by Tosoh Corporation, column: TSK-GEL H type manufactured by Tosoh Corporation, solvent: THF, based on polystyrene), the number average molecular weight (Mn) of polymer (A-4) was 16,000, and the molecular weight distribution (Mw/Mn) thereof was 2.00. As a result of the ¹H-NMR measurement (apparatus: JNM-LA400 manufactured by JEOL, solvent: CDCl₃), polymer (A-4) had 1.9 trimethoxysilyl groups on average in one molecule. As a result of the DSC measurement, polymer (A-4) had a glass transition temperature of -59°C.

### (Synthetic Example 5)

The allyl group-terminal polypropyleneoxide (100 parts by weight) after the above-mentioned purification, which was obtained in Synthetic Example 2, and trimethoxysilane (1.10 parts by weight) were reacted at 90°C for 2 hr using an isopropanol solution (36 weight ppm) of platinum vinylsiloxane complex with platinum content 3 wt% as a catalyst to give polyoxypropylene-based polymer (A-5) having a trimethoxysilyl group. As a result of the GPC measurement (solution delivery system: HLC-8120GPC manufactured by Tosoh Corporation, column: TSK-GEL H type manufactured by Tosoh Corporation, solvent: THF), the number average molecular weight (Mn) of polymer (A-5) was 28,500, and the molecular weight distribution (Mw/Mn) thereof was 1.25. As a result of the ¹H-NMR measurement (apparatus: JNM-LA400 manufactured by JEOL, solvent: CDCl₃), polymer (A-5) had 1.6 trimethoxysilyl groups on average in one molecule. As a result of the DSC measurement, polymer (A-5) had a glass transition temperature of -59°C.

### (Synthetic Example 6)

Using 0.02 molar equivalent of zinc chloride as a catalyst, (methoxymethyl)trimethoxysilane produced by reference to the method described in Example 2 of JP-A-2007-513203 was reacted with 4 molar equivalents of acetyl chloride. By reaction for 36 hr under heated under reflux conditions, (methoxymethyl)trichlorosilane was synthesized. (Methoxymethyl)trichlorosilane purified by distillation and 1 mol equivalent of methyldichlorosilane (trade name: LS-50 manufactured by Shin-Etsu Chemical Co., Ltd.) were mixed, methyltributylammonium chloride (0.05 molar equivalent) was added, and the mixture was reacted under heating under reflux conditions for 3 hr. Methoxynethyldichlorosilane was obtained at an about 50% conversion ratio.
(Methoxymethyl)dichlorosilane purified by distillation and 2.5 molar equivalents of trimethyl orthoacetate were charged in a reaction container, and (methoxymethyl)dichlorosilane was slowly added while stirring thoroughly. The addition rate was adjusted so that the temperature of the reaction mixture would not exceed 50°C. After the completion of addition, almost quantitative conversion of (methoxymethyl)dichlorosilane to (methoxymethyl)dimethoxysilane was confirmed by ¹H-NMR spectrum. ¹H-NMR was measured using JNM-LA400 manufactured by JEOL and in CDCl₃ solvent, and analyzed with the peak of CHCl₃ as 7.26 ppm. Purification by distillation under reduced pressure gave (methoxymethyl)dimethoxysilane
¹H-NMR (400 MHz, CDCl₃) of (methoxymethyl)dimethoxysilane: δ 4.52(t,1H), 3.60(s,6H), 3.35(s,3H), 3.19(d,2H).

The allyl group-terminal polypropyleneoxide (100 parts by weight) after the above-mentioned purification, which was obtained in Synthetic Example 1, and
(methoxymethyl)dimethoxysilane (1.86 parts by weight) were reacted at 90°C for 2 hr using an isopropanol solution (36 weight ppm) of platinum vinylsiloxane complex with platinum content 3 wt% as a catalyst to give polyoxypropylene-based polymer (A-6) having a (methoxymethyl) dimethoxysilyl group. As a result of the GPC measurement (solution delivery system: HLC-8120GPC manufactured by Tosoh Corporation, column: TSK-GEL H type manufactured by Tosoh Corporation, solvent: THF), the number average molecular weight (Mn) of polymer (A-6) was 20,500, and the molecular weight distribution (Mw/Mn) thereof was 1.34. As a result of the ¹H-NMR measurement (apparatus: JNM-LA400 manufactured by JEOL, solvent: CDCl₃), polymer (A-6) had 1.5 (methoxymethyl) dimethoxysilyl groups on average in one molecule. As a result of the DSC measurement, polymer (A-6) had a glass transition temperature of -59°C.

### (Example 1)

The reactive silicone group-containing polyoxypropylene-based polymer (A-1) (100 parts by weight) obtained in Synthetic Example 1, triethylene glycol bis(2-ethylhexanoate) (trade name: OXSOFT 3G8 manufactured by OXEA, hydroxyl value: 1.5 mgKOH/g) (55 parts by weight) as a plasticizer, colloidal calcium carbonate surface-treated with fatty acid (trade name: HAKUENKA CCR manufactured by Shiraishi Calcium Kaisha, Ltd.) (120 parts by weight), rutile titanium oxide (trade name: TIPAQUE R-820 manufactured by ISHIHARA SANGYO KAISHA, LTD.) (20 parts by weight), thixotropy-imparting agent (trade name: DISPARLON 6500 manufactured by Kusumoto Chemicals, Ltd.) (2 parts by weight), hindered amine-based light stabilizer (trade name: TINUVIN 770 manufactured by BASF Japan Ltd.) (1 part by weight), and benzotriazole based ultraviolet absorber (trade name: TINUVIN 326 manufactured by BASF Japan Ltd.) (1 part by weight) were mixed and thoroughly kneaded. The mixture was passed 3 times through a triple paint roll to give a mixture. The obtained mixture was dehydrated under reduced pressure at 120°C for 2 hr, cooled to 50°C or less, added with vinyltrimethoxysilane (trade name: Dynasylan VTMO manufactured by EVONIK) (2 parts by weight) as a dehydrating agent, γ-(2-aminoethyl)aminopropyltrimethoxysilane (trade name: Dynasylan DAMO manufactured by EVONIK) (3 parts by weight) as an adhesion-imparting agent, and finally, dibutyltin bis(acetylacetonate) (manufactured by Nitto Kasei Co., Ltd., trade name: NEOSTAN U-220H) (2 parts by weight) as a curing catalyst and the mixture was kneaded to give a one-component curable composition. This was sealed in a moisture-proof cartridge substantially free of moisture.

### (Example 2)

In the same manner as in Example 1 except that the amount of triethylene glycol bis(2-ethylhexanoate) was set to 30 parts by weight, and a phthalate-based plasticizer, diisodecyl phthalate (trade name: DIDP manufactured by J-PLUS Co., Ltd.) (25 parts by weight) was used, a curable composition was obtained.

### (Example 3)

In the same manner as in Example 1 except that reactive silicone group-containing polyoxypropylene-based polymer (A-2) (50 parts by weight) obtained in Synthetic Example 2 and acrylate-based polymer (A-3) (50 parts by weight) obtained in Synthetic Example 3 was used instead of reactive silicone group-containing polyoxypropylene-based polymer (A-1), a curable composition was obtained.

### (Example 4)

In the same manner as in Example 1 except that reactive silicone group-containing polyoxypropylene-based polymer (A-4) (100 parts by weight) obtained in Synthetic Example 4 was used instead of reactive silicone group-containing polyoxypropylene-based polymer (A-1), and dioctyltin dilaurate (manufactured by Nitro Kasei Co., Ltd., trade name: NEOSTAN U-810) (0.3 parts by weight) was used as a curing catalyst instead of dibutyltin bisacetylacetonate, a curable composition was obtained.

### (Example 5)

In the same manner as in Example 4 except that γ-glycidoxypropyltrimethoxysilane (trade name: KBM-403 manufactured by Shin-Etsu Chemical Co., Ltd.) (2 parts by weight) was further added, a curable composition was obtained.

### (Example 6)

In the same manner as in Example 4 except that glycidoxyoctyltrimethoxysilane (trade name: KBM-4803 manufactured by Shin-Etsu Chemical Co., Ltd.) (2 parts by weight) was further added, a curable composition was obtained.

### (Example 7)

In the same manner as in Example 4 except that reactive silicone group-containing polyoxypropylene-based polymer (A-5) (100 parts by weight) obtained in Synthetic Example 5 was used instead of reactive silicone group-containing polyoxypropylene-based polymer (A-4), a curable composition was obtained.

### (Example 8)

In the same manner as in Example 7 except that phenylguanidine solution (3 parts by weight) instead of dioctyltin dilaurate was used as a curing catalyst, a curable composition was obtained. The phenylguanidine solution is a 45 wt% concentration solution wherein 1-phenylguanidine (product of NIPPON CARBIDE INDUSTRIES CO., INC.) is dissolved in N-butylbenzenesulfonamide (trade name: TOPCIZER No.7 manufactured by Fuji Amide Chemical Co., Ltd.).

### (Example 9)

In the same manner as in Example 8 except that an ethylene glycol structure-containing silane coupling agent (trade name: X-12-641 manufactured by Shin-Etsu Chemical Co., Ltd.) (3 parts by weight) was further used, a curable composition was obtained.

### (Example 10)

In the same manner as in Example 8 except that reactive silicone group-containing polyoxypropylene-based polymer (A-6) (100 parts by weight) obtained in Synthetic Example 6 was used instead of reactive silicone group-containing polyoxypropylene-based polymer (A-5), and the amount of phenylguanidine solution was changed to 1 part by weight, a curable composition was obtained.

### (Comparative Example 1)

In the same manner as in Example 1 except that diisodecyl phthalate (55 parts by weight) was used instead of triethylene glycol bis(2-ethylhexanoate), a curable composition was obtained.

### (Comparative Example 2)

In the same manner as in Example 3 except that diisodecyl phthalate (55 parts by weight) was used instead of triethylene glycol bis(2-ethylhexanoate), a curable composition was obtained.

### (Comparative Example 3)

In the same manner as in Example 1 except that diethylene glycol dibenzoate (trade name: MONOCIZER PB-3A manufactured by DIC Corporation) (55 parts by weight) was used instead of triethylene glycol bis(2-ethylhexanoate), a curable composition was obtained.

### (Comparative Example 4)

In the same manner as in Example 1 except that bis(2-ethylhexyl) adipate (trade name: DOA manufactured by DAIHACHI CHEMICAL INDUSTRY CO.,LTD.) (55 parts by weight) was used instead of triethylene glycol bis(2-ethylhexanoate), a curable composition was obtained.

### (Comparative Example 5)

In the same manner as in Example 1 except that polypropylene glycol having a number average molecular weight of 3000 (trade name: ACTCALL P-23 manufactured by Mitsui Takeda Chemicals, Inc., hydroxyl value: 38 mgKOH/g) (55 parts by weight) was used instead of triethylene glycol bis(2-ethylhexanoate), a curable composition was obtained.

### (Comparative Example 6)

In the same manner as in Example 1 except that poly(oxyethyleneoxypropylene)glycol monoether having a number average molecular weight of 240 (trade name: NEWPOL 50HB-55 manufactured by Sanyo Chemical Industries, Ltd., oxyethylene group amount: 50 mol%, hydroxyl value: 234 mgKOH/g) (55 parts by weight) was used instead of triethylene glycol bis(2-ethylhexanoate), a curable composition was obtained.

### (Comparative Example 7)

In the same manner as in Example 1 except that poly(oxyethyleneoxypropylene)glycol monoether having a number average molecular weight of 1800 (trade name: NEWPOL 50HB-660 manufactured by Sanyo Chemical Industries, Ltd., oxyethylene group amount: 50 mol%, hydroxyl value: 31 mgKOH/g) (55 parts by weight) was used instead of triethylene glycol bis(2-ethylhexanoate), a curable composition was obtained.

### (Comparative Example 8)

In the same manner as in Example 1 except that polyethylene glycol having a number average molecular weight of 600 (trade name: Poly-G21-187 manufactured by Arch Chemicals, hydroxyl value: 187 mgKOH/g) (55 parts by weight) was used instead of triethylene glycol bis(2-ethylhexanoate), a curable composition was obtained.

The kind and amount of the components in the curable compositions obtained Examples 1 - 10 and Comparative Examples 1 - 8 are shown in the following Tables 1 - 4. The unit of the amount of the components shown in the following Tables 1 - 4 is parts by weight.

**Table 1**

| | | Ex. 1 | Ex. 2 | Ex. 3 | Ex. 4 | Ex. 5 |
|---|---|---|---|---|---|---|
| organic polymer (component (A)) | polymer (A-1) | 100 | 100 | | | |
| | polymer (A-2) | | | 50 | | |
| | polymer (A-3) | | | 50 | | |
| | polymer (A-4) | | | | 100 | 100 |
| plasticizer | triethylene glycol bis(2-ethylhexanoate) (component (B)) | 55 | 30 | 55 | 55 | 55 |
| | (diisodecyl phthalate | | 25 | | | |
| curing catalyst (component (C)) | dibutyltin bis(acetylacetonate) | 2 | 2 | 2 | | |
| | dioctyltin dilaurate | | | | 0.3 | 0.3 |
| calcium carbonate | | 120 | 120 | 120 | 120 | 120 |
| titanium oxide | | 20 | 20 | 20 | 20 | 20 |
| thixotropy-imparting agent | | 2 | 2 | 2 | 2 | 2 |
| ultraviolet absorber | | 1 | 1 | 1 | 1 | 1 |
| light stabilizer | | 1 | 1 | 1 | 1 | 1 |
| vinyltrimethoxysilane | | 2 | 2 | 2 | 2 | 2 |
| γ-(2-aminoethyl)aminopropyltrimethoxysilane | | 3 | 3 | 3 | 3 | 3 |
| γ-glycidoxypropyltrimethoxysilane | | | | | | 2 |

**Table 2**

| | | Ex. 6 | Ex. 7 | Ex. 8 | Ex. 9 | Ex. 10 |
|---|---|---|---|---|---|---|
| organic polymer component ((A)) | polymer (A-4) | 100 | | | | |
| | polymer (A-5) | | 100 | 100 | 100 | |
| | polymer (A-6) | | | | | 100 |
| plasticizer | triethylene glycol bis(2-ethylhexanoate) (component (B)) | 55 | 55 | 55 | 55 | 55 |
| curing catalyst (component (C)) | dioctyltin dilaurate | 0.3 | 0.3 | | | |
| | phenylguanidine solution | | | 3 | 3 | 1 |
| calcium carbonate | | 120 | 120 | 120 | 120 | 120 |
| titanium oxide | | 20 | 20 | 20 | 20 | 20 |
| thixotropy-imparting agent | | 2 | 2 | 2 | 2 | 2 |
| ultraviolet absorber | | 1 | 1 | 1 | 1 | 1 |
| light stabilizer | | 1 | 1 | 1 | 1 | 1 |
| vinyltrimethoxysilane | | 2 | 2 | 2 | 2 | 2 |
| γ-(2-aminoethyl)aminopropyltrimethoxysilane | | 3 | 3 | 3 | 3 | 3 |
| glycidoxyoctyltrimethoxysilane | | 2 | | | | |
| ethylene glycol structure-containing silane coupling agent | | | | | 3 | |

**Table 3**

| | | Com. Ex.1 | Com. Ex.2 | Com. Ex.3 | Com. Ex.4 |
|---|---|---|---|---|---|
| organic polymer (component (A)) | polymer (A-1) | 100 | | 100 | 100 |
| | polymer (A-2) | | 50 | | |
| | polymer (A-3) | | 50 | | |
| plasticizer | diisodecyl phthalate | 55 | 55 | | |
| | diethylene glycol dibenzoate | | | 55 | |
| | bis(2-ethylhexyl) adipate | | | | 55 |
| curing catalyst (component (C)) | dibutyltin bis(acetylacetonate) | 2 | 2 | 2 | 2 |
| calcium carbonate | | 120 | 120 | 120 | 120 |
| titanium oxide | | 20 | 20 | 20 | 20 |
| thixotropy-imparting agent | | 2 | 2 | 2 | 2 |
| ultraviolet absorber | | 1 | 1 | 1 | 1 |
| light stabilizer | | 1 | 1 | 1 | 1 |
| vinyltrimethoxysilane | | 2 | 2 | 2 | 2 |
| γ-(2-aminoethyl)aminopropyltrimethoxysilane | | 3 | 3 | 3 | 3 |

**[Table 4]**

| | | Com. Ex.5 | Com. Ex.6 | Com. Ex.7 | Com. Ex.8 |
|---|---|---|---|---|---|
| organic polymer (component (A)) | polymer (A-1) | 100 | 100 | 100 | 100 |
| plasticizer | polypropylene glycol (Mn 3000) | 55 | | | |
| | poly(oxyethyleneoxypropylene)glycol monoether (Mn 240) | | 55 | | |
| | poly(oxyethyleneoxypropylene)glycol monoether (Mn 1800) | | | 55 | |
| | polyethylene glycol (Mn 600) | | | | 55 |
| curing catalyst (component (C)) | dibutyltin bis(acetylacetonate) | 2 | 2 | 2 | 2 |
| calcium carbonate | | 120 | 120 | 120 | 120 |
| titanium oxide | | 20 | 20 | 20 | 20 |
| thixotropy-imparting agent | | 2 | 2 | 2 | 2 |
| ultraviolet absorber | | 1 | 1 | 1 | 1 |
| light stabilizer | | 1 | 1 | 1 | 1 |
| vinyltrimethoxysilane | | 2 | 2 | 2 | 2 |
| γ-(2-aminoethyl)aminopropyltrimethoxysilane | | 3 | 3 | 3 | 3 |

### (property evaluation)

The skin formation time, depth curability, viscosity, adhesiveness to substrate of the curable compositions obtained in Examples 1 - 0 and Comparative Examples 1 - 8 were measured. The results are shown in the following Tables 5 and 6.

### (skin formation time)

The curable compositions produced in Examples 1 - 10 and Comparative Examples 1 - 8 were filled in a moisture-proof paper/aluminum cartridge (manufactured by Showa Marutsutsu Co., Ltd., volume 330 ml) and stored at 23°C and 50%RH conditions for 7 days to allow for sufficient chemical dehydration in a curable composition. The curable composition was spread on a corrugated board with a spatula to a thickness of about 3 mm under the conditions of 23°C and 50%RH, and the time up to when the curable composition gently touched on its surface with a microspatula no longer stayed on the microspatula was measured as "initial skin formation time (A)".

Then, another curable composition filled in a moisture-proof paper/aluminum cartridge was stored in a dryer at 50°C for 4 weeks, then under the conditions of 23°C and 50%RH for one day, the curable composition was taken out from the cartridge and, in the same manner as in the measurement of initial skin formation time (A), the time up to when the composition no longer stayed on the microspatula was measured as "skin formation time (B) after storage at 50°C for 4 weeks".

In addition, the "ratio of skin formation time (B) after storage at 50°C for 4 weeks/initial skin formation time (change ratio of skin formation time (B)/(A))" was calculated. The (B)/(A) is also shown in the following Tables 5 and 6.

### (depth curability)

Under the conditions of 23°C and 50%RH, the above-mentioned curable composition was filled in a polyethylene tube (diameter 12 mm) while preventing entry of bubbles, the surface was leveled with a spatula, and a specimen was prepared. The specimen was left standing for 7 days under the conditions of 23°C and 50%RH, the surface cured part was peeled off, the uncured part was completely removed, and the thickness of the cured part was measured with a vernier caliper.

### (viscosity)

Under the conditions of 23°C and 50%RH, the above-mentioned curable composition was filled in a 100cc cup while preventing entry of bubbles. Using a BS-type viscometer manufactured by Tokimec, Inc. and rotor No.7, the viscosity of the curable composition was measured at a rotating speed of 2 rpm under the conditions of 23°C and 50%R.

### (adhesiveness to substrate)

The above-mentioned curable composition was placed in close adhesion to a soft polyvinyl chloride substrate (manufactured by Taiyukizai Co., LTD., JIS K6744 pearl gray) or a rigid polyvinyl chloride substrate (manufactured by NIHON TACT, JIS K6745 gray), the surfaces of which were wiped and washed with ethanol in advance, and aged under constant temperature and humidity conditions at 23°C and 50%RH for 7 days to form a cured product (dry conditions). The interface between the obtained cured product and the substrate was cut with a razor blade, the cured product was pull in a 90 degree direction, and the destruction state of the cured product obtained under dry conditions was observed.

In addition, the cured product formed on the substrate under the above-mentioned dry conditions was immersed in pure water, and the cured product was aged in the immersion stated in the pure water in a dryer at 50°C for 7 days (wet conditions). The water temperature of pure water, in which the cured product was immersed, was lowered to 23°C, the cured product was taken out, lightly dried, the interface between the cured product and the substrate was cut with a razor blade, the cured product was pulled in a 90 degree direction, and the destruction state of the cured product obtained under wet conditions was observed.

The destruction state of the cured product was observed, and cohesive failure (CF) or interfacial failure (AF) was judged. In the following Tables 5 and 6, 100% cohesive failure is indicated as C100, 100% interfacial failure is indicated as A100 and, for example, 50% cohesive failure and 50% interfacial failure is indicated as C50/A50. The cohesive failure means destruction of a cured product itself, and a cured product that underwent cohesive failure shows good adhesiveness to a substrate.

**[Table 5]**

| | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|
| skin formation time | initial (A) (min) | 20 | 20 | 4C | 10 | 10 | 10 | 20 | 30 | 35 | 35 |
| | after storage at 50°C for 4 weeks(B) (min) | 60 | 60 | 120 | 10 | 15 | 15 | 25 | 25 | 25 | 30 |
| | (B)/(A) | 3.0 | 3.0 | 3.0 | 1.0 | 1.5 | 1.5 | 1.3 | 0.8 | 0.8 | 0.9 |
| depth curability (mm) | | 11.6 | 9.5 | 10.9 | 11.5 | 10.5 | 10.3 | 10.2 | 10.0 | 10.2 | 11.0 |
| viscosity (Pa·s) | | 880 | 900 | 965 | 1030 | 1120 | 1140 | 1130 | 1160 | 1150 | 960 |
| adhesiveness to substrate | soft polyvinyl chloride (dry conditions) | C100 | C50/ A50 | C100 | A100 | A100 | A100 | C90/ A10 | C100 | C100 | C100 |
| | rigid polyvinyl chloride (dry conditions) | A100 | A100 | C100 | A100 | A100 | A100 | C100 | C100 | C100 | C100 |
| | soft polyvinyl chloride (wet conditions) | C100 | C100 | C100 | A100 | C10/ A90 | C100 | A100 | C100 | C100 | C100 |
| | rigid polyvinyl chloride (wet conditions) | A100 | A100 | C100 | A100 | C90/ A10 | C100 | A100 | C100 | C100 | C100 |

**[Table 6]**

| | | Com. Ex. 1 | Com. Ex. 2 | Com. Ex. 3 | Com. Ex. 4 | Com. Ex. 5 | Com. Ex. 6 |
|---|---|---|---|---|---|---|---|
| skin formation time | initial (A) (min) | 25 | 35 | 25 | 30 | 20 | 20 |
| | after storage at 50°C for 4 weeks(B) | 90 min | 180 min | 6 hr or more | 24 hr or more | 20 min | 80 min |
| | (B)/(A) | 3.6 | 5.1 | 14.4 or more | 48 or more | 1.0 | 4.0 |
| depth curability (mm) | | 8.1 | 7.4 | 10.9 | 10.5 | 11.0 | 11.5 |
| viscosity (Pa·s) | | 950 | 1175 | 1565 | 820 | 1260 | 1020 |
| adhesiveness to substrate | soft polyvinyl chloride (dry conditions) | A100 | C100 | A100 | A100 | C100 | C100 |
| | rigid polyvinyl chloride (dry conditions) | A100 | C100 | A100 | A100 | C100 | C100 |
| | soft polyvinyl chloride (wet conditions) | A100 | C100 | C100 | C10/ A90 | C15/ A85 | C100 |
| | rigid polyvinyl chloride (wet conditions) | C100 | C100 | A100 | C50/ A50 | C100 | C100 |

| | | | | | | | |
|---|---|---|---|---|---|---|---|
| (note) Since liquid came out from the cured products obtained in Comparative Examples 7 and 8, property evaluation thereof was not performed. | | | | | | | |

The curable composition of Example 1 using triethylene glycol bis(2-ethylhexanoate) as a plasticizer shows fast initial skin formation time (curability), even after storage under 50°C conditions for 4 weeks, delay in skin formation time (degradation of curability) is small, and can be preferably used over a long term. The curable composition of Example 1 shows low change ratio (B)/(A) of skin formation time, good storage stability, low viscosity, superior workability, and superior depth curability, as compared to the curable composition of Comparative Example 1 using a conventional phthalate-based plasticizer (diisodecyl phthalate).

Triethylene glycol bis(2-ethylhexanoate) has good compatibility with conventional phthalate-based plasticizers and, as shown in the results of Example 2, triethylene glycol bis(2-ethylhexanoate) and conventional phthalate-based plasticizers (diisodecyl phthalate) can be used in combination.

A curable composition containing a reactive silicone group-containing acrylate-based polymer as component (A) had problems of low workability due to high viscosity and delayed depth curability as compared to curable compositions containing a reactive silicone group-containing polyoxyalkylene-based polymer. However, as is clear from the comparison of Example 3 and Comparative Example 2, workability and depth curability of a curable composition containing a reactive silicone group-containing acrylate-based polymer can be improved by using component (B) in the present invention.

As is clear from the comparison of Example 1 using reactive silicone group-containing polyoxypropylene-based polymer (A-1) alone as component (A) and Example 3 using reactive silicone group-containing polyoxypropylene-based polymer (A-2) and reactive silicone group-containing acrylate-based polymer (A-3), use of a reactive silicone group-containing acrylate-based polymer as component (A) can improve adhesiveness to rigid polyvinyl chloride. The results show that component (B) in the present invention is preferably used in combination with a reactive silicone group-containing acrylate-based polymer.

As shown in Example 4, component (B) in the present invention can be preferably used as a plasticizer for a curable composition containing polyoxypropylene-based polymer (A-4) having a urethane bond in the main chain and trimethoxysilyl group on the terminal. The curable composition of Example 4 has a change ratio (B)/(A) of skin formation time, which is 1, and was free of curing retardation due to the storage. However, the cured product obtained from the curable composition of Example 4 was hard and inferior in the adhesiveness to a substrate, possibly because polymer (A-4) has a comparatively small number average molecular weight, and the amount of the silyl group introduced into the terminal is high.

The cured products obtained from the curable compositions of Examples 5 and 6, which are the curable composition of Example 4 further added with an epoxy group-containing silane coupling agent (γ-glycidoxypropyltrimethoxysilane or glycidoxyoctyltrimethoxysilane) showed improved adhesiveness to a substrate under wet conditions. Example 6 using glycidoxyoctyltrimethoxysilane showed more superior adhesiveness under wet conditions than Example 5 using γ-glycidoxypropyltrimethoxysilane. The results reveal that an epoxy group-containing silane coupling agent and having a greater number of carbon atoms between glycidoxy group and silyl group provides more superior improvement effect on the adhesiveness to a substrate.

A comparison of Examples 7 and 8 reveals that, when reactive silicone group-containing polyoxypropylene-based polymer (A-5) is used, the adhesiveness to a substrate can be improved by using an amidine compound (phenylguanidine solution) as component (C) instead of a dioctyltin-based compound (dioctyltin dilaurate).

A comparison of Examples 8 and 9 reveals that the depth curability of a curable composition can be improved by using an ethylene glycol structure-containing silane coupling agent. A small improving effect on the depth curability is considered to be attributable to a small amount of an ethylene glycol structure-containing silane coupling agent used.

In the curable composition of Example 10 containing polyoxypropylene-based polymer (A-6) having a (methoxymethyl)dimethoxysilyl group, the amount of the amidine compound (phenylguanidine solution) was small but the skin formation time was short. In addition, the curable composition of Example 10 was also superior in the properties other than the skin formation time.

The curable composition of Comparative Example 3 containing diethylene glycol as a plasticizer was superior in depth curability but showed a high change ratio (B)/(A) of the skin formation time and markedly lowered curing rate after storage.

The curable composition of Comparative Example 4 containing bis(2-ethylhexyl) adipate which is a plasticizer frequently used for polyvinyl chloride resins also showed a high change ratio (B)/(A) of the skin formation time and markedly lowered curing rate after storage.

The curable composition of Comparative Example 5 containing polypropylene glycol having a number average molecular weight of 3000 as a plasticizer showed high viscosity as compared to the curable composition of Example 1.

The curable composition of Comparative Example 6 containing poly(oxyethyleneoxypropylene)glycol monoether having a number average molecular weight of 240 as a plasticizer showed a high change ratio (B)/(A) of the skin formation time and tended to show lowered curing rate after storage. These are assumed to be the effect of the high hydroxyl value (234 mg KOH/g) of the plasticizer (poly(oxyethyleneoxypropylene)glycol monoether) used in Comparative Example 6.

The cured products formed from the curable composition of Comparative Example 7 containing poly(oxyethyleneoxypropylene)glycol monoether having a number average molecular weight of 1800 as a plasticizer showed a phenomenon of liquid leak. When the curable composition of Comparative Example 8 containing polyethylene glycol having a number average molecular weight of 600 as a plasticizer was spread with a spatula to a thickness of about 3 mm on corrugated board and the surface thereof was observed 24 hr later, it exuded a liquid.

From the results of the aforementioned Examples and Comparative Examples, it is clear that the molecular weight of the plasticizer used and the amount of oxyethylene contained therein influence compatibility with component (A). Among many ester compounds, a diester compound obtained from polyethylene glycol and aliphatic monocarboxylic acid and/or alicyclic monocarboxylic acid is particularly suitable as a plasticizer for a one-component curable composition using component (A).

### Industrial Applicability

The curable composition of the present invention is useful for sealing materials, adhesives, coating materials, water-proof materials and the like.

This application is based on a patent application No. 2013-268738 filed in Japan, the contents of which are incorporated in full herein.

## Claims

1. A curable composition comprising
(A) 100 parts by weight of an organic polymer having a silicon-containing group, which can be crosslinked by forming a siloxane bond,
(B) 21 - 300 parts by weight of a diester compound obtained from polyethylene glycol and aliphatic monocarboxylic acid and/or alicyclic monocarboxylic acid, and
(C) 0.01 - 20 parts by weight of a curing catalyst.

2. The curable composition according to claim 1, wherein the organic polymer of component (A) is at least one selected from the group consisting of a polyoxyalkylene-based polymer, a saturated hydrocarbon-based polymer and a (meth)acrylate-based polymer.

3. The curable composition according to claim 2, wherein the polyoxyalkylene-based polymer is a polyoxypropylene-based polymer.

4. The curable composition according to any one of claims 1 to 3, wherein the organic polymer of component (A) has a urethane bond and/or a urea bond in the main chain thereof.

5. The curable composition according to any one of claims 1 to 4, wherein the silicon-containing group of the organic polymer of component (A) is a trimethoxysilyl group.

6. The curable composition according to any one of claims 1 to 5, wherein the polyethylene glycol constituting the diester compound of component (B) is at least one selected from diethylene glycol, triethylene glycol, tetraethylene glycol and pentaethylene glycol.

7. The curable composition according to any one of claims 1 to 6, wherein the diester compound of component (B) has a molecular weight of not more than 500.

8. The curable composition according to any one of claims 1 to 7, wherein the diester compound of component (B) is substantially free of a hydroxy group.

9. The curable composition according to any one of claims 1 to 5 and 8, wherein the diester compound of component (B) is triethylene glycol bis(2-ethylhexanoate).

10. The curable composition according to any one of claims 1 to 9, wherein the curing catalyst of component (C) is an organotin compound.

11. The curable composition according to claim 10, wherein the organotin compound is a dioctyltin-based compound.

12. The curable composition according to any one of claims 1 to 9, wherein the curing catalyst of component (C) is an amidine compound.

13. The curable composition according to claim 12, wherein the amidine compound is 1-phenylguanidine.

14. A sealing material comprising the curable composition according to any one of claims 1 to 13.

15. An adhesive comprising the curable composition according to any one of claims 1 to 13.

16. A coating material comprising the curable composition according to any one of claims 1 to 13.

17. A water-proof material comprising the curable composition according to any one of claims 1 to 13.

18. A cured product formed from the curable composition according to any one of claims 1 to 13.
